# EUROPEAN PATENT APPLICATION

(11) **EP 4 360 951 A1**
(43) Date of publication of application: **01.05.2024**
(21) Application number: 22828003.8
(22) Date of filing: 24.03.2022
(51) Int. Cl.: B60P 3/00, A01B 69/00, A01B 73/00, B60P 1/43, B60P 3/07, B60W 50/14

(54) **TRANSPORT SYSTEM FOR WORK MACHINE AND WORK MACHINE**

(30) Priority: 21.06.2021 JP 2021102523
(71) Applicant: KUBOTA CORPORATION, Osaka-shi, Osaka 556-8601 (JP)
(72) Inventor: SAKAGUCHI Kazuo, Sakai-shi, Osaka 590-0823 (JP); TAMATANI Kenji, Sakai-shi, Osaka 590-0823 (JP); TAKAHASHI Yusuke, Sakai-shi, Osaka 590-0823 (JP)
(74) Representative: Müller-Boré & Partner Patentanwälte PartG mbB
(86) International application number: PCT/JP2022/013958
(87) International publication number: WO 2022/270084

(57) **Abstract**

The workload of an operator relating to loading/unloading of a working vehicle is reduced.

A transport system for a working machine (1), includes
a sensor (41L) to sense surroundings of a working machine (1) configured to perform automatic operation, the sensor (41L) being provided in or on the working machine (1), a transport determiner (54) to determine whether it is possible to load the working machine (1) onto and/or unload the working machine (1) from a transport vehicle (80) based on the surroundings of the working machine (1) sensed by the sensor (41L). The transport system for a working machine (1) includes a communication device (55) provided in or on the working machine (1) to transmit information relating to loading and/or unloading of the working machine (1) onto and/or from the transport vehicle (80).

## Description

### Technical Field

The present invention relates to a transport system for a working machine, such as an agricultural machine or a construction machine, including a vehicle body to which a working device can be coupled, and relates to a working machine.

### Background Art

PTL 1 is known as a technique to load an agricultural machine such as a combine onto a loading platform of a truck. PTL 1 discloses a technique including a travel stop means for stopping travel when an agricultural machine travels a predetermined distance from an automatic travel start position (which is a rear position of a truck) to a loading completion position on the loading platform of the truck through bridge plates provided at the truck.

### Citation List

### Patent Literature

PTL 1: Japanese Unexamined Patent Application Publication No. 2006-333834

### Summary of Invention

### Technical Problem

The agricultural machine of PTL 1 can be loaded by automatic travel only when the following preconditions are satisfied. That is, the automatic travel start position is appropriate as a loading location, the position and inclination etc. of the bridge plates are appropriate, and the loading platform of the truck has a loading space. When the preconditions are not satisfied, the safety of the loading by the automatic travel is not ensured, and therefore an operator needs to do some work to satisfy the preconditions. Such work is troublesome for the operator. Also, it is not always easy for the operator to determine whether the preconditions are satisfied, and the reliability of the work is insufficient. Further, when also the agricultural machine is unloaded, the same problems as described above arise. That is, there is a demand to reduce the workload of the operator relating to the loading/unloading of the agricultural machine.

In view of the above problems, an object of the present invention is to provide a transport system for a working machine capable of reducing the workload of an operator relating to loading/unloading of a working machine.

### Solution to Problem

Technical solutions of the present invention to attain the object are characterized by the following feature(s).

A transport system for a working machine includes a sensor to sense surroundings of a working machine configured to perform automatic operation, the sensor being provided in or on the working machine, and a transport determiner to determine whether it is possible to load the working machine onto and/or unload the working machine from a transport vehicle based on the surroundings of the working machine sensed by the sensor.

The transport system further includes a communication device provided in or on the working machine to transmit information relating to loading and/or unloading of the working machine onto and/or from the transport vehicle.

The communication device, if the transport determiner makes a determination that it is not possible to load the working machine onto the transport vehicle or unload the working machine from the transport vehicle, transmits the information which is the determination to the transport vehicle.

The transport vehicle includes a bridge plate and an adjustment mechanism configured to adjust a position of the bridge plate. The communication device transmits, to the transport vehicle, the information which is vehicle size information relating to a vehicle size of the working machine. The adjustment mechanism adjusts the position of the bridge plate based on the vehicle size information.

The transport vehicle includes a bridge plate. The communication device transmits, to a display, the information which is vehicle size information relating to a vehicle size of the working machine. The display displays the vehicle size information.

The transport vehicle includes a bridge plate. The communication device transmits, to the display, the information which is travel information including a position of the bridge plate and/or an angle of the bridge plate for the working machine to pass over the bridge plate. The display displays the travel information.

The sensor senses the position of the bridge plate. The transport determiner determines whether it is possible to load the working machine onto the transport vehicle based on the position of the bridge plate. The working machine travels by the automatic operation toward the bridge plate of the transport vehicle when it is possible to load the working machine onto the transport vehicle.

The sensor senses the position of the bridge plate. The transport determiner determines whether it is possible to unload the working machine from the transport vehicle based on the position of the bridge plate. The working machine travels by the automatic operation toward the bridge plate of the transport vehicle when it is possible to unload the working machine from the transport vehicle.

A working machine includes a working vehicle, a sensor provided in or on the working vehicle to sense surroundings of the working vehicle, and a transport determiner to determine whether it is possible to load the working vehicle onto and/or unload the working vehicle from a transport vehicle based on the surroundings of the working vehicle sensed by the sensor.

The working machine further includes a controller to cause the working vehicle to travel by automatic operation toward a bridge plate of the transport vehicle when it is possible to load the working vehicle onto the transport vehicle.

The sensor senses the bridge plate and/or the transport vehicle while the working vehicle travels by the automatic operation toward the transport vehicle.

The controller stops the automatic operation or causes the working vehicle to travel backward when the sensor senses a change in a position of the bridge plate and/or the transport vehicle.

The transport vehicle includes an adjustment mechanism to adjust a position of the bridge plate. The adjustment mechanism adjusts the position of the bridge plate based on vehicle size information of the working vehicle.

The sensor senses a position of the bridge plate. The transport determiner determines whether it is possible to load the working vehicle onto the transport vehicle based on the position of the bridge plate. The working vehicle travels by the automatic operation toward the bridge plate of the transport vehicle when it is possible to load the working vehicle onto the transport vehicle.

### Advantageous Effects of Invention

The present invention makes it possible to reduce the workload of the operator relating to the loading/unloading of a working machine.

### Brief Description of Drawings

[FIG. 1] FIG. 1 is a block diagram of a transmission.
[FIG. 2] FIG. 2 is a perspective view of a raising/lowering device.
[FIG. 3] FIG. 3 is a control block diagram of an agricultural machine.
[FIG. 4] FIG. 4 is a diagram in which an example of a route along which a working vehicle moves from an agricultural field A to an agricultural field B is displayed on a settings screen M1.
[FIG. 5A] FIG. 5A is a side view illustrating a state in which a working vehicle is located behind a transport vehicle.
[FIG. 5B] FIG. 5B is a side view illustrating a state in which the working vehicle has been loaded on the transport vehicle.
[FIG. 6] FIG. 6 illustrates an example of a selection screen M2 of a display.
[FIG. 7A] FIG. 7A is a side view illustrating a working vehicle and a transport vehicle and their surroundings before the working vehicle is loaded onto the transport vehicle.
[FIG. 7B] FIG. 7B is a plan view illustrating the working vehicle and the transport vehicle and their surroundings before the working vehicle is loaded onto the transport vehicle.
[FIG. 8A] FIG. 8A is a side view illustrating an example of a vehicle condition.
[FIG. 8B] FIG. 8B is a plan view illustrating the example of the vehicle condition.
[FIG. 9A] FIG. 9A is a side view illustrating a state in which a cultivator as a working device is coupled to the working vehicle.
[FIG. 9B] FIG. 9B is a plan view illustrating the state in which the cultivator as the working device is coupled to the working vehicle.
[FIG. 10A] FIG. 10A is a side view illustrating a state in which a baler as a working device is coupled to the working vehicle.
[FIG. 10B] FIG. 10B is a plan view illustrating the state in which the baler as the working device is coupled to the working vehicle.
[FIG. 11A] FIG. 11A illustrates a state in which the working vehicle is trapped in a depression in a road.
[FIG. 11B] FIG. 11B illustrates a state in which a structure is present on the road in front of the working vehicle.
[FIG. 11C] FIG. 11C illustrates a state in which the working vehicle passes below a structure.
[FIG. 11D] FIG. 11D is a side view illustrating the transport vehicle inclined in a front-rear direction with respect to the ground.
[FIG. 11E] FIG. 11E is a rear view illustrating the transport vehicle inclined in a width direction with respect to the ground.
[FIG. 12A] FIG. 12A is a flowchart showing a process of a loading automatic operation performed by a transport system for an agricultural machine.
[FIG. 12B] FIG. 12B is a plan view illustrating a working vehicle and a transport vehicle and their surroundings before the working vehicle is loaded onto the transport vehicle.
[FIG. 12C] FIG. 12C is a plan view illustrating a working vehicle and a transport vehicle and their surroundings before the working vehicle is loaded onto the transport vehicle.
[FIG. 12D] FIG. 12D is a plan view illustrating a state in which the working vehicle has been loaded onto the transport vehicle.
[FIG. 12E] FIG. 12E is a rear view illustrating the transport vehicle inclined in the width direction with respect to the ground.
[FIG. 13A] FIG. 13A illustrates an example of an instruction screen M3.
[FIG. 13B] FIG. 13B illustrates an example of adjustment of bridge plates.
[FIG. 13C] FIG. 13C illustrates an example of a sensing start screen M4.
[FIG. 14] FIG. 14 is a flowchart showing a process of a loading automatic operation performed by the transport system for an agricultural machine.
[FIG. 15] FIG. 15 illustrates an agricultural machine according to an embodiment. Description of Embodiments

Hereinafter, embodiments of the present invention will be described with reference to the drawings.

A transport system for a working machine is a system that enables an agricultural machine, which is an example of a working machine, to be loaded onto or unloaded from a transport vehicle by automatic operation.

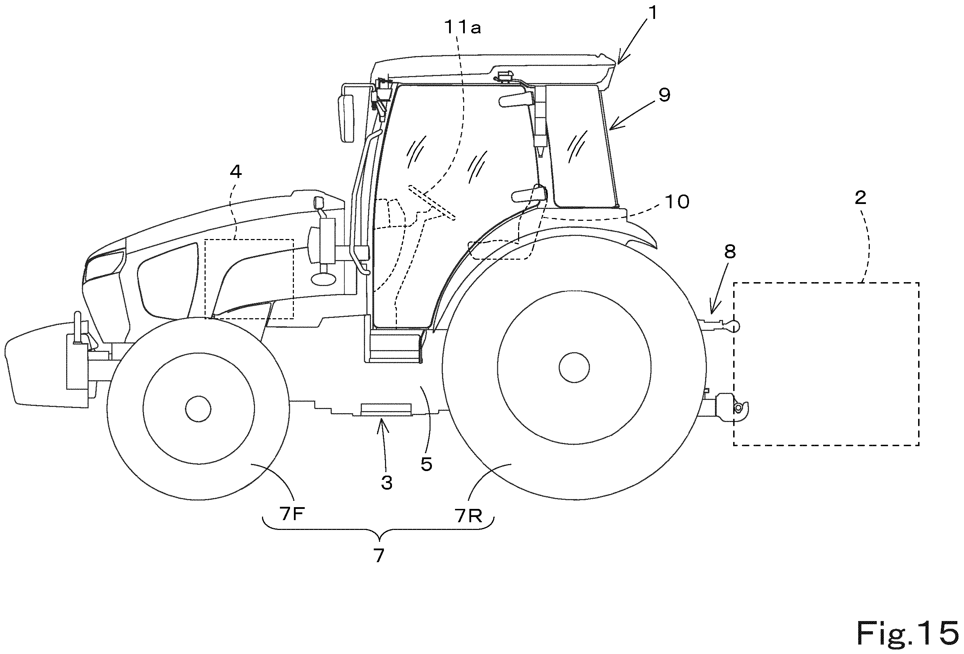

FIG. 15 illustrates an example of an agricultural machine. The agricultural machine is a tractor to which a working device is coupled, a rice transplanter having a working device, a combine having a working device, or the like.

As illustrated in FIG. 15, the agricultural machine includes a working vehicle 1 and a working device 2. The working vehicle 1 is, for example, a tractor. The agricultural machine includes the working vehicle 1 (tractor) in a state in which the working device 2 is not coupled.

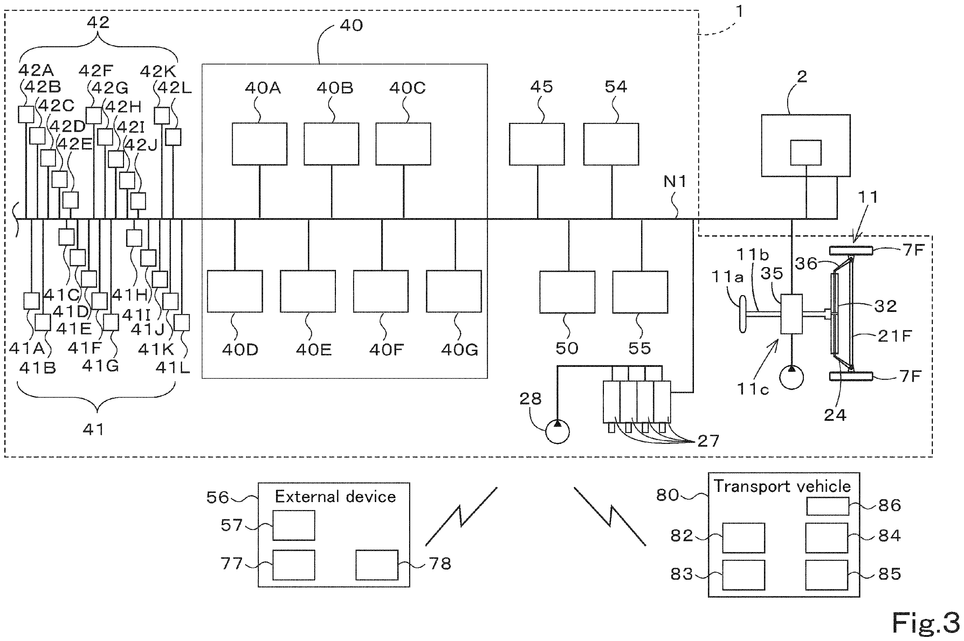

The working vehicle 1 includes a vehicle body 3 having a traveling device 7, a prime mover 4, a transmission 5, a coupler 8, and a steering device 11 (see FIG. 3 described later). The traveling device 7 is a device having at least one front wheel 7F and at least one rear wheel 7R. The front wheel 7F may be of a tire type or a crawler type. Also, the rear wheel 7R may be of a tire type or a crawler type. The prime mover 4 is, for example, an internal combustion engine, such as a gasoline engine or a diesel engine; or an electric motor. In this embodiment, the prime mover 4 is a diesel engine.

The transmission 5 can switch the propelling force of the traveling device 7 by speed-changing, and can switch the traveling device 7 between forward travel and backward travel. A cabin 9 is provided in the vehicle body 3. An operator's seat 10 is provided in the cabin 9.

Also, the coupler 8 is provided at a rear portion of the vehicle body 3. The working device 2 is attachable to and detachable from the coupler 8. In this embodiment, the coupler 8 is a raising/lowering device that raises or lowers the attached working device 2.

The working device 2 is a device that performs various works on an agricultural field (ground), crops planted in the agricultural field, and the like, and is coupled to the working vehicle 1. The working device 2 is, for example, a cultivator for cultivation, a fertilizer spreader for spreading a fertilizer, an agricultural chemical spreader for spreading an agricultural chemical, a harvester for harvesting, a mower for mow grass or the like, a tedder for tedding grass or the like, a rake for raking grass or the like, or a baler for baling grass or the like.

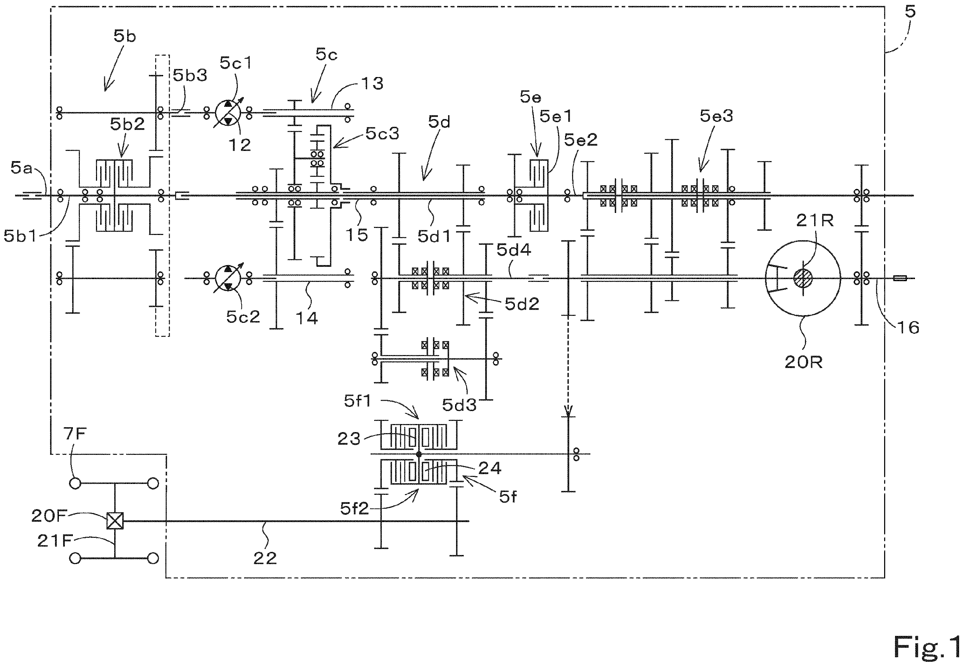

As illustrated in FIG. 1, the transmission 5 includes a main shaft (propeller shaft) 5a, a shuttle 5b, a main transmission unit 5c, an auxiliary transmission unit 5d, a PTO power transmission unit 5e, and a front transmission unit 5f. The propeller shaft 5a is rotatably supported by a housing case of the transmission 5. Power from a crankshaft of the prime mover 4 is transmitted to the propeller shaft 5a.

The shuttle 5b has a shuttle shaft 5b 1 and a forward/backward travel switch 5b2. The power from the propeller shaft 5a is transmitted to the shuttle shaft 5b 1. The forward/backward travel switch 5b2 includes, for example, a hydraulic clutch, and switches the rotational direction of the shuttle shaft 5b1, that is, the forward travel or backward travel of the working vehicle 1, by engaging or disengaging the hydraulic clutch.

The main transmission unit 5c is a continuously variable transmission mechanism that changes input power in a stepless manner. The continuously variable transmission mechanism includes a hydraulic pump 5c1, a hydraulic motor 5c2, and a planetary gear mechanism 5c3. The hydraulic pump 5c1 is rotated by power from an output shaft 5b3 of the shuttle 5b. The hydraulic pump 5c1 is, for example, a variable displacement pump having a swash plate 12. The hydraulic pump 5c1 changes the angle (swash plate angle) of the swash plate 12 to change the flow rate of the hydraulic fluid delivered from the hydraulic pump 5c1. The hydraulic motor 5c2 is a motor that is rotated by the hydraulic fluid delivered from the hydraulic pump 5c1 via a fluid passage circuit such as a pipe. The swash plate angle of the hydraulic pump 5c1 is changed or the power input to the hydraulic pump 5c1 is changed to change the rotational speed of the hydraulic motor 5c2.

The planetary gear mechanism 5c3 is a mechanism including a plurality of gears and power transmission shafts, such as an input shaft and an output shaft, and includes an input shaft 13 to which the power of the hydraulic pump 5c1 is input, an input shaft 14 to which the power of the hydraulic motor 5c2 is input, and an output shaft 15 from which power is output. The planetary gear mechanism 5c3 combines the power of the hydraulic pump 5c1 and the power of the hydraulic motor 5c2 and transmits the combined power to the output shaft 15.

Thus, with the main transmission unit 5c, the swash plate angle of the swash plate 12 of the hydraulic pump 5c1, the rotational speed of the prime mover 4, or the like, is changed to change the power output to the auxiliary transmission unit 5d. Although the main transmission unit 5c includes the continuously variable transmission mechanism, the main transmission unit 5c may include a stepped transmission mechanism in which speed-changing is performed with gears.

The auxiliary transmission unit 5d is a stepped transmission mechanism having a plurality of gears for speed-changing the power. The auxiliary transmission unit 5d changes and outputs (speed-changes) the power input from the output shaft 15 of the planetary gear mechanism 5c3 to the auxiliary transmission unit 5d by appropriately changing the connection (meshing) of the plurality of gears. The auxiliary transmission unit 5d includes an input shaft 5d1, a first transmission clutch 5d2, a second transmission clutch 5d3, and an output shaft 5d4. The input shaft 5d1 is a shaft to which the power of the output shaft 15 of the planetary gear mechanism 5c3 is input, and inputs the input power to the first transmission clutch 5d2 and the second transmission clutch 5d3 via the gears and the like. By switching between connection and disconnection of each of the first transmission clutch 5d2 and the second transmission clutch 5d3, the input power is changed and output to the output shaft 5d4. The power output to the output shaft 5d4 is transmitted to the rear wheel differential 20R. The rear wheel differential 20R rotatably supports a rear axle 21R to which rear wheels 7R are attached.

The PTO power transmission unit 5e includes a PTO clutch 5e1, a PTO propeller shaft 5e2, and a PTO transmission section 5e3. The PTO clutch 5e1 includes, for example, a hydraulic clutch, and is switched between a state in which the power of the propeller shaft 5a is transmitted to the PTO propeller shaft 5e2 (connected state) and a state in which the power of the propeller shaft 5a is not transmitted to the PTO propeller shaft 5e2 (disconnected state) by engaging or disengaging the hydraulic clutch. The PTO transmission section 5e3 includes a transmission clutch, a plurality of gears, and the like, and changes and outputs power (rotational speed) input from the PTO propeller shaft 5e2 to the PTO transmission section 5e3. The power of the PTO transmission section 5e3 is transmitted to a PTO shaft 16 via the gears and the like.

The front transmission unit 5f includes a first front transmission clutch 5f1 and a second front transmission clutch 5f2. The first front transmission clutch 5f1 and the second front transmission clutch 5f2 are capable of receiving power transmitted from the auxiliary transmission unit 5d. For example, the power of the output shaft 5d4 is transmitted via the gears and a transmission shaft. The power from the first front transmission clutch 5f1 and the second front transmission clutch 5f2 can be transmitted to a front axle 21F via a front transmission shaft 22. Specifically, the front transmission shaft 22 is connected to a front wheel differential 20F. The front wheel differential 20F rotatably supports the front axle 21F to which front wheels 7F are attached.

The first front transmission clutch 5f1 and the second front transmission clutch 5f2 include hydraulic clutches or the like. A fluid passage is connected to the first front transmission clutch 5f1. The fluid passage is connected to a control valve 23 to which the hydraulic fluid delivered from a hydraulic pump is supplied. The first front transmission clutch 5f1 is switched between a connected state and a disconnected state in accordance with the opening of the control valve 23. A fluid passage is connected to the second front transmission clutch 5f2. The fluid passage is connected to a control valve 24. The second front transmission clutch 5f2 is switched between a connected state and a disconnected state in accordance with the opening of the control valve 24. Each of the control valve 23 and the control valve 24 is, for example, a two-position switching valve with a solenoid valve, and is switched between the connected state and the disconnected state by energizing or deenergizing a solenoid of the solenoid valve.

When the first front transmission clutch 5f1 is in the disconnected state and the second front transmission clutch 5f2 is in the connected state, the power of the auxiliary transmission unit 5d is transmitted to the front wheels 7F through the second front transmission clutch 5f2. Accordingly, four-wheel drive (4WD) in which the front wheels and the rear wheels are driven by the power is performed, and the rotational speed of the front wheels is substantially the same as the rotational speed of the rear wheels (4WD equivalent speed state). In contrast, when the first front transmission clutch 5f1 is in the connected state and the second front transmission clutch 5f2 is in the disconnected state, four-wheel drive is performed and the rotational speed of the front wheels is higher than the rotational speed of the rear wheels (4WD double speed state). Also, when the first front transmission clutch 5f1 and the second front transmission clutch 5f2 are in the connected state, the power of the auxiliary transmission unit 5d is not transmitted to the front wheels 7F, and thus two-wheel drive (2WD) is performed in which the rear wheels are driven by the power.

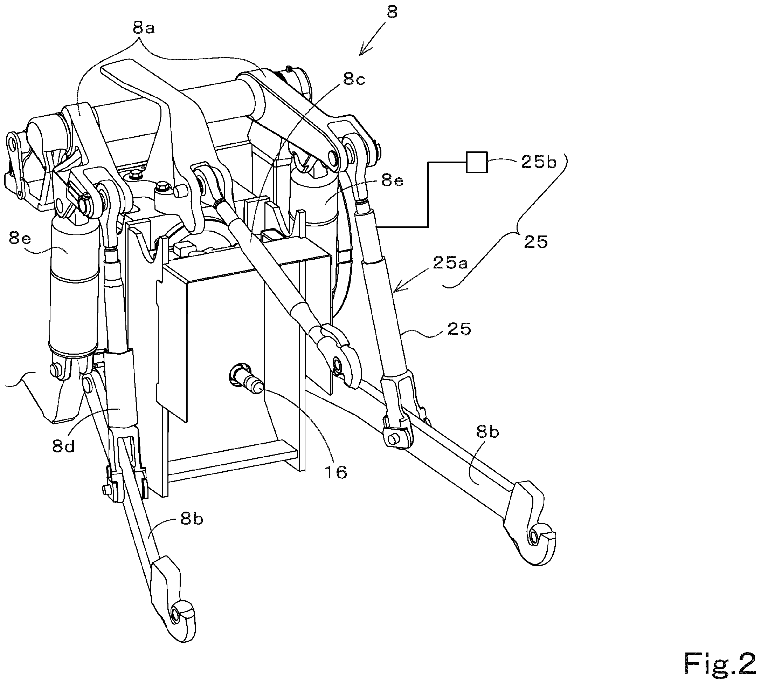

As illustrated in FIG. 2, the coupler (raising/lowering device) 8 includes a lift arm 8a, at least one lower link 8b, a top link 8c, a lift rod 8d, and a lift cylinder 8e. A front end portion of the lift arm 8a is supported by a rear upper portion of a case (transmission case) that houses the transmission 5 so as to be swingable upward or downward. The lift arm 8a is swung (raised or lowered) by the driving of the lift cylinder 8e. The lift cylinder 8e includes a hydraulic cylinder. The lift cylinder 8e is connected to a hydraulic pump via a control valve 34. The control valve 34 is a solenoid valve or the like, and causes the lift cylinder 8e to extend and retract.

A front end portion of the lower link 8b is supported by a rear lower portion of the transmission 5 so as to be swingable upward or downward. A front end portion of the top link 8c is supported by a rear portion of the transmission 5, at a position above the lower link 8b so as to be swingable upward or downward. The lift rod 8d couples the lift arm 8a and the lower link 8b. The working device 2 is coupled to a rear portion of the lower link 8b and a rear portion of the top link 8c. When the lift cylinder 8e is driven (extended or retracted), the lift arm 8a is raised or lowered, and the lower link 8b coupled to the lift arm 8a via the lift rod 8d is raised or lowered. Consequently, the working device 2 swings upward or downward (is raised or lowered) with a front portion of the lower link 8b serving as a fulcrum.

The coupler (raising/lowering device) 8 is provided with an angle changer 25. The angle changer 25 is a device that changes the posture of the working device 2 attached to the vehicle body 3. The angle changer 25 has a change cylinder 25a including a hydraulic cylinder, and a control valve 25b. The change cylinder 25a is connected to a hydraulic pump via the control valve 25b. The control valve 25b is a solenoid valve or the like, and causes the change cylinder 25a to extend and retract. The change cylinder 25a couples the lift arm 8a and the lower link 8b.

As illustrated in FIG. 3, the working vehicle 1 has a plurality of auxiliary valves 27. The plurality of auxiliary valves 27 are hydraulic switching valves to which the hydraulic fluid is supplied from a hydraulic pump 28. The plurality of auxiliary valves 27 have output ports. A hydraulic hose or the like can be connected to desirable one of the output ports. By connecting the hydraulic hose connected to the desirable output port of the auxiliary valves 27 to a hydraulic attachment of the working device 2, any of various hydraulic attachments attached to the working device 2 can be actuated.

As illustrated in FIG. 3, the steering device 11 includes a handle (steering wheel) 11a, a rotation shaft (steering shaft) 11b that rotates with rotation of the handle 11a, and an assist mechanism (power steering mechanism) 11c that assists steering of the handle 11a. The assist mechanism 11c includes a control valve 35 and a steering cylinder 32. The control valve 35 is, for example, a three-position switching valve that can be switched by movement of a spool or the like. The control valve 35 can be also switched by steering of the steering shaft 11b. The steering cylinder 32 is connected to arms (knuckle arms) 36 that change the direction of the front wheels 7F. Thus, when the handle 11a is operated, the switching position and the opening of the control valve 35 are switched in accordance with the handle 11a, and the steering cylinder 32 is extended or retracted to the left or the right in accordance with the switching position and the opening of the control valve 35. Hence, the steering direction of the front wheels 7F can be changed. The steering device 11 described above is merely an example, and is not limited to the configuration described above.

As illustrated in FIG. 3, the working vehicle 1 includes a plurality of detectors 41. The plurality of detectors 41 are devices that detect states of the working vehicle 1, and include, for example, a water temperature sensor 41A that detects the water temperature, a fuel sensor 41B that detects the remaining amount of the fuel, a prime mover rotation sensor (rotation sensor) 41C that detects the rotational speed of the prime mover 4, an accelerator pedal sensor 41D that detects the operation amount of the accelerator pedal, a steering angle sensor 41E that detects the steering angle of the steering device 11, an angle sensor 41F that detects the angle of the lift arm 8a, an inclination detection sensor 41G that detects the inclination in the width direction (right direction or left direction) of the vehicle body 3, a speed sensor 41H that detects the vehicle speed (speed) of the vehicle body 3, a PTO rotation sensor (rotation sensor) 41I that detects the rotational speed of the PTO shaft, a battery sensor 41J that detects the voltage of a storage battery such as a battery, a position measuring device 41K that detects the position of the vehicle body 3, and a sensor 41L that senses the surroundings of the working vehicle 1. The above-described detectors 41 are examples and the detectors are not limited to the above-described sensors.

As illustrated in FIG. 3, the position measuring device 41K can detect its own position (measured position information including latitude and longitude) by a satellite positioning system (positioning satellites) of such as D-GPS, GPS, GLONASS, Hokuto, Galileo, or Michibiki. That is, the position measuring device 41K receives satellite signals (positions of positioning satellites, transmission times, correction information, and the like) transmitted from the positioning satellites, and detects the position (for example, latitude and longitude) of the working vehicle 1, that is, the vehicle body position based on the satellite signals. The position measuring device 41K may be equipped with an inertial measurement unit, such as an acceleration sensor that detects the acceleration or a gyroscope sensor that detects the angular velocity. The inertial measurement unit can detect the roll angle, pitch angle, yaw angle, and the like, of the vehicle body 3 by the acceleration sensor or the gyroscope sensor, and can correct the vehicle body position by using the detected roll angle, pitch angle, yaw angle, and the like, of the vehicle body 3. The inertial measurement unit may be provided in the working vehicle 1 separately from the position measuring device 41K.

As illustrated in FIG. 3, the sensor 41L is an optical sensor, a sonic sensor, or the like. When the sensor 41L is an optical sensor, the sensor 41L is an imaging device such as a camera, a light detection and ranging (LiDAR), or the like. The imaging device is a charge coupled device (CCD) camera equipped with a CCD image sensor or a complementary metal oxide semiconductor (CMOS) camera equipped with a CMOS image sensor. The LiDAR (laser sensor) emits pulsed infrared light or the like millions of times per second and measures the reflection time to detect the distance to an object that has reflected the infrared light. When the sensor 41L is a sonic sensor, the sensor 41L is a sonar. The sonar emits a sound wave and detects the distance to an object that has reflected the sound wave. In this embodiment, the sensor 41L may be any one of the imaging device, the LiDAR (laser sensor), and the sonar. The imaging device, the LiDAR (laser sensor), and the sonar may be appropriately combined and installed in the working vehicle 1, and the configuration is not limited.

Also, the sensor 41L is attached to the working vehicle 1 so as to sense the surroundings of the front, side, and rear of the working vehicle 1 (vehicle body 3). The direction of sensing by the sensor 41L is not limited.

As illustrated in FIG. 3, the working vehicle 1 includes a plurality of operation members (operation devices) 42. The plurality of operation members 42 include a shuttle lever 42A that switches between forward travel and backward travel of the vehicle body 3, an ignition switch 42B that, for example, starts the prime mover 4, a PTO speed-change lever 42C that sets the rotational speed of the PTO shaft, a transmission switch 42D that switches between automatic transmission and manual transmission, a shift lever 42E that manually switches the speed stage (speed level) of the transmission 5, an accelerator 42F that increases or decreases the vehicle speed, a raising/lowering switch 42G that operates raising or lowering of the coupler (raising/lowering device) 8, a height setting dial 42H that sets the upper limit of the coupler (raising/lowering device) 8, a vehicle speed lever 42I that sets the vehicle speed, a hydraulic operation actuator 42J, a rotation setting actuator 42K that sets the upper limit of the rotational speed of the prime mover, a selection switch 42L that selects whether to load or unload the working vehicle 1 onto a transport vehicle 80 (for example, truck) or from the transport vehicle 80 by automatic operation, and the like.

Setting actuators, such as the transmission switch 42D, the height setting dial 42H, and the rotation setting actuator 42K, are provided in a console box provided beside the operator's seat 10. The operation of the vehicle body 3 can be set by the operator operating the setting actuators (the transmission switch 42D, the height setting dial 42H, the rotation setting actuator 42K). The operation members 42 described above are merely examples, and the operation members are not limited to those described above.

As illustrated in FIG. 3, the working vehicle 1 includes a display 50. The display 50 is a device that displays various items of information relating to the working vehicle 1. The display 50 is a device having a liquid crystal panel, an organic EL panel, or the like, and screen switching and screen operation can be performed by operating a hardware switch provided at the operator's seat 10 or the display 50. The display 50 may be, but not limited to, a device capable of performing screen switching and screen operation by operating a software switch displayed on a screen.

As illustrated in FIG. 3, the working vehicle 1 includes a controller 40 and a storage unit 45. The controller 40 is a device that performs various controls of the working vehicle 1, and includes a CPU, electric/electronic circuit(s), and/or the like. The storage unit 45 includes a non-volatile memory or the like and stores various items of information.

The controller 40 includes a transmission controller 40A, an engine controller 40B, a PTO controller 40C, a raising/lowering controller 40D, an automatic operation controller 40E, an angle controller 40F, and an auxiliary hydraulic controller 40G.

The controller 40 and a controller 2a of the working device 2 are connected to an in-vehicle network N1. That is, the transmission controller 40A, the engine controller 40B, the PTO controller 40C, the raising/lowering controller 40D, the automatic operation controller 40E, the angle controller 40F, the auxiliary hydraulic controller 40G, and the controller 2a are connected to the in-vehicle network N1.

The controller 40 does not need to include all of the transmission controller 40A, the engine controller 40B, the PTO controller 40C, the raising/lowering controller 40D, the automatic operation controller 40E, the angle controller 40F, and the auxiliary hydraulic controller 40G, and is provided in the working vehicle 1 in accordance with the specifications of the working vehicle 1. The transmission controller 40A, the engine controller 40B, the PTO controller 40C, the raising/lowering controller 40D, the automatic operation controller 40E, the angle controller 40F, and the auxiliary hydraulic controller 40G may be provided in the integrated controller 40.

The transmission controller 40A performs transmission control. In the transmission control, when an automatic transmission function is enabled, one of the main transmission unit 5c and the auxiliary transmission unit 5d is automatically switched in accordance with the state of the working vehicle 1, and the speed stage (speed level) of the transmission 5 is automatically changed to a predetermined speed stage (speed level). In the transmission control, when the transmission switch 42D is switched to the manual transmission, one of the main transmission unit 5c and the auxiliary transmission unit 5d is automatically switched in accordance with the speed stage (speed level) set by the shift lever 42E to change the speed stage of the transmission 5.

The transmission controller 40A performs control (travel switch control) in the travel drive state of the traveling device 7 (operation of the traveling device 7). In the travel switch control, when the shuttle lever 42A is operated to forward travel, the forward/backward travel switch 5b2 of the shuttle 5b is switched to forward travel to cause the vehicle body 3 to travel forward. Also, in the travel switch control, when the shuttle lever 42A is operated to backward travel, the forward/backward travel switch 5b2 of the shuttle 5b is switched to backward travel to cause the vehicle body 3 to travel backward.

In the travel switch control, in the case of 4WD, the first front transmission clutch 5f1 is brought into the disconnected state and the second front transmission clutch 5f2 is brought into the connected state. In the travel switch control, in the case of 4WD double speed, the first front transmission clutch 5f1 is brought into the connected state and the second front transmission clutch 5f2 is brought into the disconnected state. In the travel switch control, in the case of 2WD, the first front transmission clutch 5f1 and the second front transmission clutch 5f2 are brought into the connected state.

The engine controller 40B performs engine control. In the engine control, when the ignition switch 42B is turned on, the prime mover 4 is started through predetermined processing, and when the ignition switch 42B is turned off, the driving of the prime mover 4 is stopped. In the engine control, when the accelerator 42F is operated, the rotational speed of the prime mover 4 (referred to as prime mover rotational speed) is changed in accordance with the operation amount of the accelerator 42F to change the vehicle speed (speed) of the vehicle body 3.

The PTO controller 40C performs PTO control. In the PTO control, when the PTO speed-change lever 42C is operated, the rotational speed of the PTO shaft (referred to as PTO rotational speed) is changed by switching the PTO speed-change gear built in the transmission 5.

The raising/lowering controller 40D performs raising/lowering control. In the raising/lowering control, when a manual raising/lowering function is enabled, and when the raising/lowering switch 42G is operated in a raising direction (upward), the control valve 34 is controlled to extend the lift cylinder 8e and raise a rear end portion (an end portion near the working device 2) of the lift arm 8a. In the raising/lowering control, when the manual raising/lowering function is enabled, and when the raising/lowering switch 42G is operated in a lowering direction (downward), the control valve 34 is controlled to retract the lift cylinder 8e, and lower the rear end portion (the end portion near the working device 2) of the lift arm 8a. When the working device 2 is raised by the coupler (raising/lowering device) 8, and when the position of the working device 2, that is, the angle of the lift arm 8a reaches the upper limit (height upper limit value) set by the height setting dial 42H, the raising operation in the coupler (raising/lowering device) 8 is stopped.

In the raising/lowering control, when a back-up function is enabled, and when the vehicle body 3 travels backward, the control valve 34 is automatically controlled to extend the lift cylinder 8e and raise the rear end portion (the end portion near the working device 2) of the lift arm 8a. In the raising/lowering control, when an auto-up function is enabled, and when the steering angle of the steering device 11 becomes a predetermined angle or more, the control valve 34 is automatically controlled to extend the lift cylinder 8e and raise the rear end portion (the end portion near the working device 2) of the lift arm 8a.

The automatic operation controller 40E controls automatic operation. The automatic operation controller 40E can perform control of line-type automatic operation and control of autonomous-type automatic operation. In the control of the line-type automatic operation, the steering device 11, the transmission 5, the prime mover 4, and the like, are controlled so that the working vehicle 1 (vehicle body 3) moves along a preset planned travel line. In the control of the autonomous-type automatic operation, the travel direction (steering direction), the vehicle speed (speed), and the like, are set based on the result of sensing the surroundings of the working vehicle 1 (vehicle body 3) by the sensor 41L or the like, and the steering device 11, the transmission 5, and the prime mover 4 are controlled so as to achieve the set steering and vehicle speed. The control may be switched between the control of the line-type automatic operation and the control of the autonomous-type automatic operation by a switch or the like, or the automatic operation controller 40E may be a device capable of performing one of the control of the line-type automatic operation and the control of the autonomous-type automatic operation, and the configuration is not limited.

The angle controller 40F performs angle control. In the angle control, in a case of a position function (fixing function), a control signal is output to the control valve 25b to fix the length of the change cylinder 25a to a predetermined length. That is, the angle in the width direction of the working device 2 (the angle of the straight line connecting lower links 8b and 8b with respect to the horizontal) set by the angle changer 25 is fixed. In the angle control, in a case of a horizontal function, a control signal is output to the control valve 25b to extend or retract the change cylinder 25a to maintain the working device 2 set by the angle changer 25 in a horizontal state. In the angle control, in a case of an inclination function, a control signal is output to the control valve 25b to extend or retract the change cylinder 25a, thereby maintaining the working device 2 set by the angle changer 25 parallel to the agricultural field (ground).

The auxiliary hydraulic controller 40G controls an auxiliary valve (actuation control valve) 27 to which a hydraulic hose or the like is connected among the plurality of auxiliary valves 27. For example, the auxiliary hydraulic controller 40G performs control to switch the flow of the hydraulic fluid output from a predetermined auxiliary valve 27 when the hydraulic operation actuator 42J such as a swingable lever is operated. For example, when the hydraulic operation actuator 42J is operated in the left direction, the auxiliary hydraulic controller 40G energizes the solenoid of the predetermined auxiliary valve 27 to move the spool of the predetermined auxiliary valve 27, thereby setting the flow direction of the hydraulic fluid to one direction. When the hydraulic operation actuator 42J is operated in the right direction, the auxiliary hydraulic controller 40G energizes the solenoid of the predetermined auxiliary valve 27 to move the spool of the predetermined auxiliary valve 27, thereby setting the flow direction of the hydraulic fluid to the other direction. Thus, the hydraulic attachment of the working device 2 can be operated by the auxiliary valve 27.

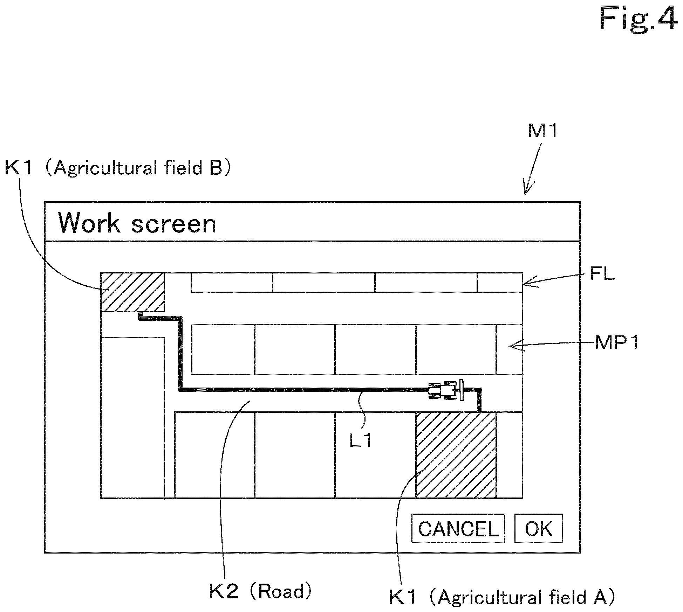

FIG. 4 is a diagram illustrating a state in which the working vehicle 1 is automatically operated to move from an agricultural field A to an agricultural field B. As illustrated in FIG. 4, when the working vehicle 1 is moved from the agricultural field A to the agricultural field B by the automatic operation, the controller 40 or the display 50 sets a planned travel route L1 from the agricultural field A to the agricultural field B. Specifically, when a predetermined operation is performed on the display 50, the display 50 displays a settings screen M1 for setting the planned travel route L1 under the control of the controller 40. In a field FL of the settings screen M1, an agricultural field map MP1 including an agricultural field K1 and a road K2 is displayed. The road K2 is an automobile road, a forest road, a farm road, or the like.

When the operator or the like operates the display 50, the planned travel route L1 from the agricultural field A to the agricultural field B can be set on the agricultural field map MP1 displayed in the field FL. In the agricultural field map MP1, the agricultural field K1 and the road K2 are associated with items of position information (latitudes and longitudes). When the planned travel route L1 is set, the planned travel route L1 is also associated with position information. When the planned travel route L1 is set in this way, the automatic operation controller 40E controls the line-type automatic operation so that the working vehicle 1 travels along the planned travel route L1.

Although the operator or the like operates the display 50 to set the planned travel route L1 in the above-described embodiment, the controller 40 or the display 50 may automatically set the planned travel route L1 by selecting the agricultural field A as a departure place and selecting the agricultural field B as an arrival place in the settings screen M1.

Also, in the settings screen M1, while the agricultural field A is selected as the departure place and the agricultural field B is set as the arrival place, setting of the planned travel route L1 associated with position information may be omitted. As described above, when the planned travel route L1 is not set (when only the agricultural field A is set as the departure place and the agricultural field B is set as the arrival place), the automatic operation controller 40E controls the autonomous-type automatic operation so that the working vehicle 1 travels from the agricultural field A to the agricultural field B.

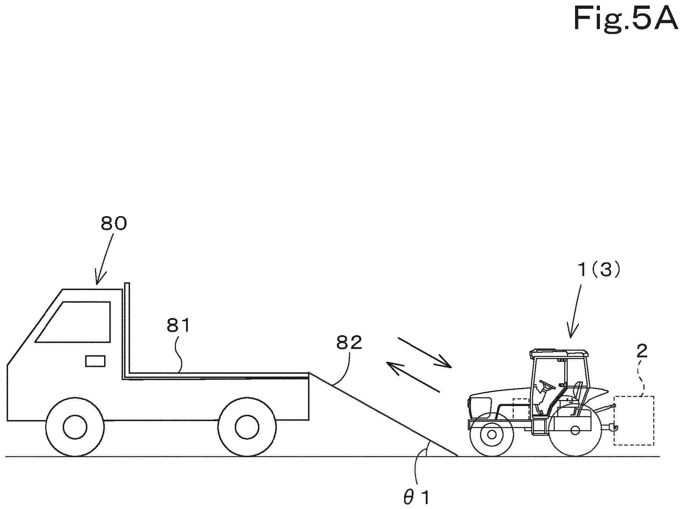

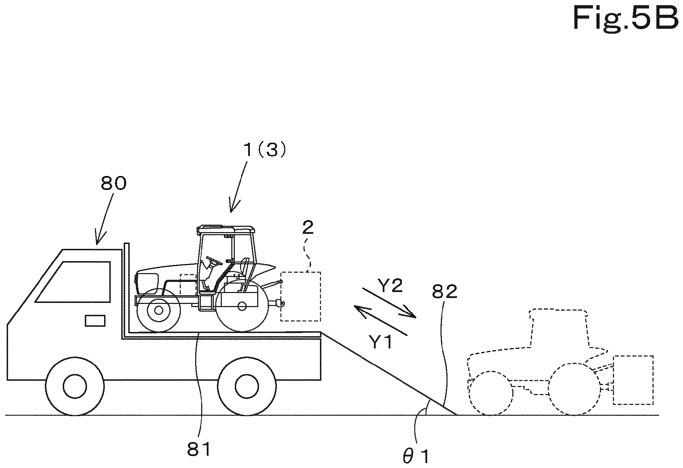

In addition to the above-described automatic operation from the agricultural field A to the agricultural field B, the working vehicle 1 can be loaded onto the transport vehicle 80 or unloaded from the transport vehicle 80 by automatic operation as illustrated in FIG. 5A and FIG. 5B. FIG. 5A is a side view illustrating a state in which the working vehicle 1 is located behind the transport vehicle 80. FIG. 5B is a side view illustrating a state in which the working vehicle 1 has been loaded on the transport vehicle 80.

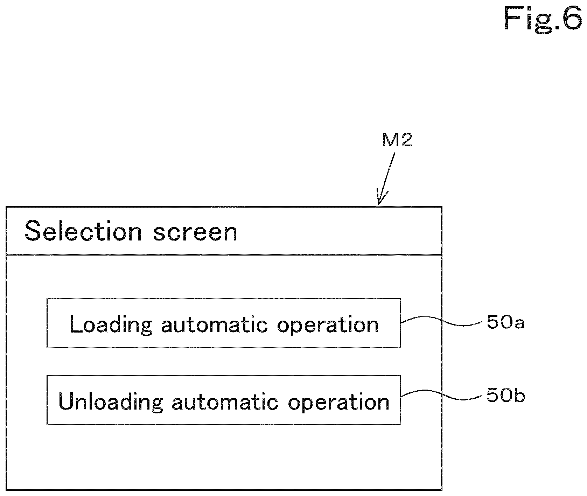

Specifically, when the selection switch 42L illustrated in FIG. 3 is operated by the operator, the controller 40 causes the display 50 to display a selection screen M2 as illustrated in FIG. 6. The selection screen M2 includes a selection button 50a indicating a loading automatic operation and a selection button 50b indicating an unloading automatic operation. When the selection button 50a in the selection screen M2 is selected by the operator, the controller 40 causes the sensor 41L to start sensing before the start of the loading automatic operation. In contrast, when the selection button 50b in the selection screen M2 is selected by the operator, the controller 40 causes the sensor 41L to start sensing before the start of the unloading automatic operation. Although the working vehicle 1 includes the selection switch 42L, this does not imply any limitation. For example, a configuration may be used in which an external device 56 or the transport vehicle 80 includes a switch for loading or unloading, the external device 56 or the transport vehicle 80 transmits an instruction signal indicating an operation of the switch to the working vehicle 1, and the controller 40 of the working vehicle 1 causes the display 50 to display the selection screen M2 based on the instruction signal.

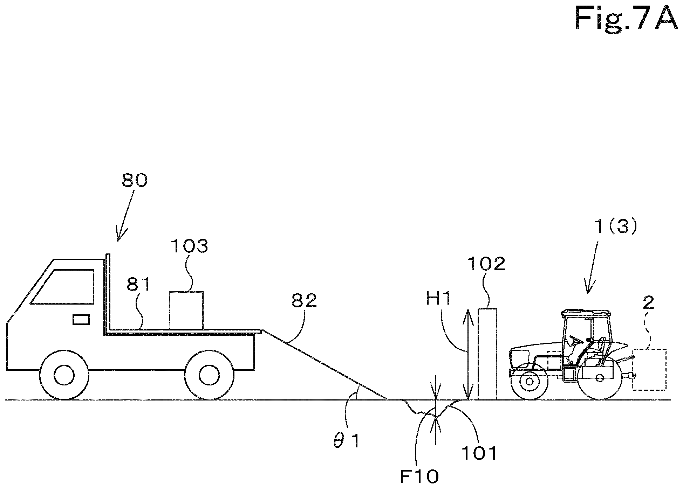

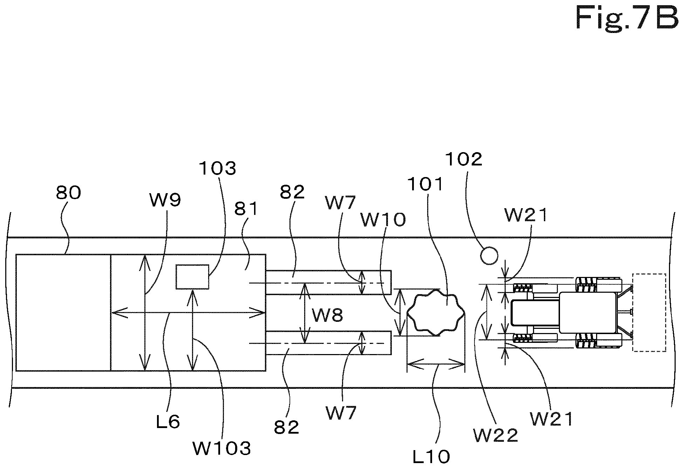

The following discusses sensing before the start of the loading automatic operation. As illustrated in FIGS. 7A and 7B, the sensor 41L senses surroundings of the working vehicle 1 (for example, surroundings in front of the working vehicle 1) before the working vehicle 1 is loaded onto the transport vehicle 80 (for example, when the working vehicle 1 is located behind the transport vehicle 80). FIG. 7A is a side view illustrating the working vehicle and the transport vehicle and their surroundings before the working vehicle is loaded onto the transport vehicle. FIG. 7B is a plan view illustrating the working vehicle and the transport vehicle and their surroundings before the working vehicle is loaded onto the transport vehicle (such surroundings may be hereinafter referred to as "surrounding condition").

As illustrated in FIGS. 7A and 7B, the surrounding condition includes a road condition, a transport vehicle condition, and a bridge plate condition. The road condition includes a depression/bump 101 on a road K2, a width W1 of a structure 102 on the road K2, a height H1 of the structure 102, a road width W5 of the road K2, and/or the like. The structure 102 is, for example, a utility pole, a traffic light, a road sign, a gutter, a sign, a gate, a streetlight, a pedestrian overpass, a bridge pier, a pole, a guardrail, a fence, a sidewalk, or the like. The transport vehicle condition includes the presence or absence of a transport vehicle 80, a lateral width W9 of a loading platform 81 of the transport vehicle 80, a length L6 of the loading platform 81, the presence or absence of an obstacle 103 on the loading platform 81, and a lateral width W103 of the loading platform 81 at the location of the obstacle 103. The bridge plate condition includes the presence or absence of bridge plate(s) 82, a width W7 of the bridge plate(s) 82, the position of the bridge plate(s) 82, and an angle θ1 indicating the inclination (gradient) of the bridge plate(s) 82.

First, sensing of the road condition will be described. As illustrated in FIG. 7A, the sensor 41L detects a width W10, a length L 10, and a depth F10 of the depression/bump 101 existing ahead in the travel direction of the working vehicle 1 and the position of the depression/bump 101 on the road K2 using a captured image, scan data obtained by scanning by the LiDAR, or the like of an area in front of the working vehicle 1.

The sensor 41L detects the width W1 and the height H1 of the structure 102 existing ahead in the travel direction of the working vehicle 1 using a captured image, scan data, or the like. The sensor 41L may include data of a profile (profile data) of the structure 102, and may identify the type of the structure 102 by performing matching by comparing the shape indicated by the profile data with the shape of the structure 102 extracted from the captured image or the scan data. Alternatively, the type of the structure 102 may be identified by comparing the feature amount of the structure 102 extracted from the captured or and the scan data with the feature amount of the structure 102 obtained from the profile data.

Next, sensing of the transport vehicle condition will be described. The sensor 41L detects the presence or absence of the transport vehicle 80 ahead in the travel direction of the working vehicle 1, and the lateral width W9 and the length L6 of the loading platform 81 of the transport vehicle 80 using a captured image, scan data, or the like. The sensor 41L may have data of profiles (profile data) of the transport vehicle 80 and the loading platform 81, and may identify the type of the transport vehicle 80 and the loading platform 81 by performing matching by comparing the shapes indicated by the profile data with the shapes of the transport vehicle 80 and the loading platform 81 extracted from the captured image or the scan data. Alternatively, the type of the transport vehicle 80 and the type of the loading platform 81 may be identified by comparing the feature amount of the transport vehicle 80 and the feature amount of the loading platform 81 extracted from the captured image or the scan data with the feature amount of the transport vehicle 80 and the feature amount of the loading platform 81 obtained from the profile data.

Next, sensing of the bridge plate condition will be described. The sensor 41L detects the presence or absence of a pair of bridge plates 82 provided at the transport vehicle 80 ahead in the travel direction of the working vehicle 1, the width W7 of each of the pair of bridge plates 82, a center-to-center distance W8 from the widthwise center of one of the pair of bridge plates 82 to the widthwise center of the other of the pair of bridge plates 82, the position of each of the pair of bridge plates 82 (for example, including at least one of the angle in the width direction of the pair of bridge plates 82, the positions of the opposite ends of each of the pair of bridge plates 82, and the degree of being parallel of the pair of bridge plates 82), how securely the end portions of the pair of bridge plates 82 that are close to the transport vehicle 80 are fixed, and the angle θ1 of the bridge plates 82 with respect to the ground, using a captured image, scan data, or the like. The sensor 41L may have data of profiles (profile data) of the bridge plates 82, and may identify the type of the bridge plates 82 by performing matching by comparing the shape indicated by the profile data with the shape of the bridge plates 82 extracted from the captured image or the scan data. Alternatively, the type of the bridge plates 82 may be identified by comparing the feature amount of the bridge plates 82 extracted from the captured image or the scan data with the feature amount of the bridge plates 82 obtained from the profile data.

As illustrated in FIG. 3, the working vehicle 1 includes a transport determiner 54. The transport determiner 54 includes a CPU, electric/electronic circuit(s), program(s), and/or the like. The transport determiner 54 determines whether the working vehicle 1 (vehicle body 3) can be loaded onto the transport vehicle 80 based on sensed data obtained by sensing by the sensor 41L (that is, data indicating the surrounding condition in front of the working vehicle 1) and a device condition in which the working device 2 is coupled to the working vehicle 1 (vehicle body 3).

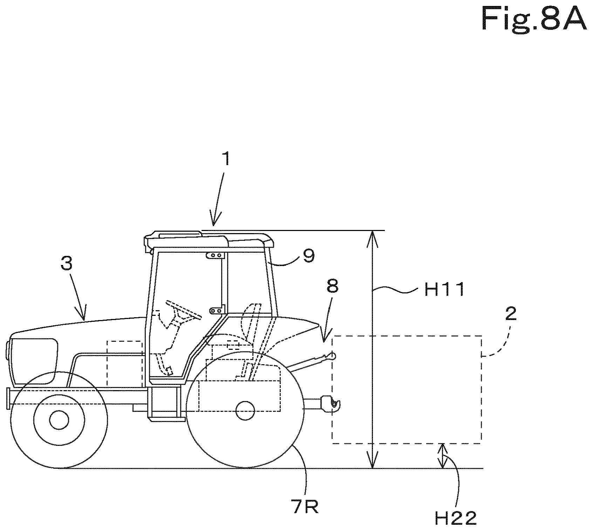

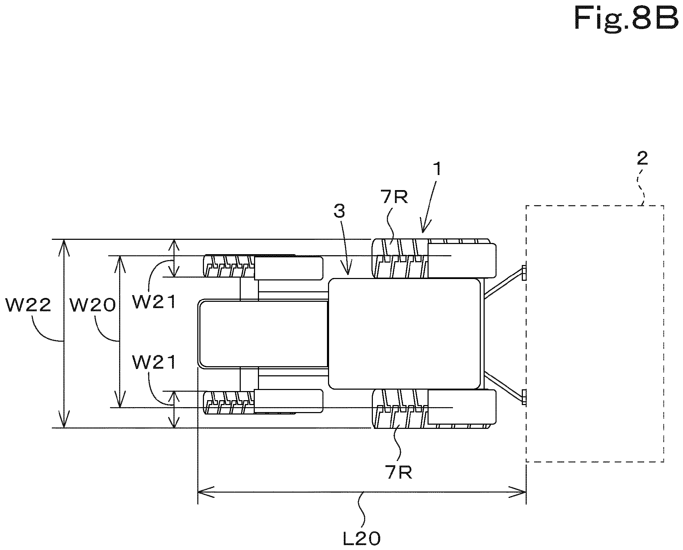

The transport determiner 54 acquires the device condition in which the working device 2 is coupled to the working vehicle 1 (vehicle body 3). As illustrated in FIGS. 8A and 8B, the device condition is a condition before the start of the loading or unloading automatic operation, and is, for example, the condition of the working vehicle 1 (vehicle condition) when the working device 2 is attached to the working vehicle 1, and/or the condition (working device condition) of the working device 2 when the working device 2 is attached to the working vehicle 1.

The vehicle condition includes drive specifications (2WD, 4WD) of the vehicle body 3, as illustrated in FIG. 8A and FIG. 8B, a vehicle body height H11 of the vehicle body 3, a vehicle body width W20 of the vehicle body 3, a tire-position maximum width W21 of the vehicle body 3, a tread width W22 of the vehicle body 3, and/or a length L20 of the vehicle body 3.

The drive specifications of the vehicle body 3 indicate whether 2WD or 4WD is set by the travel switch control, and can be acquired by the transport determiner 54 or the controller 40. The vehicle body height H11 of the vehicle body 3 is a dimension from a front wheel 7F or a rear wheel 7R to the highest position, for example, a dimension from the front wheel 7F or the rear wheel 7R to the top plate of the cabin 9. The vehicle body width W20 of the vehicle body 3 is a horizontal distance between a leftmost protruding portion of the vehicle body 3 and a rightmost protruding portion of the vehicle body 3.

The tire-position maximum width W21 on the left of the vehicle body 3 is a horizontal distance between a leftmost protruding portion and a rightmost protruding portion of the front wheel 7F and the rear wheel 7R located on the left of the vehicle body 3 when the vehicle body 3 is viewed from the front. The tire-position maximum width W21 on the right of the vehicle body 3 is a horizontal distance between a leftmost protruding portion and a rightmost protruding portion of the front wheel 7F and the rear wheel 7R located on the right of the vehicle body 3 when the vehicle body 3 is viewed from the front. Further, the tread width W22 of the vehicle body 3 is a horizontal distance between the center of the tire-position maximum width W21 on the left of the vehicle body 3 and the center of the tire-position maximum width W21 on the right of the vehicle body 3.

The length L20 of the vehicle body 3 is a distance from the front end of the vehicle body 3 to the rear end of the vehicle body 3, which is the rear end of the coupler (raising/lowering device) 8 (the rear end of the lower link 8b).

The vehicle body height H11 of the vehicle body 3, the vehicle body width W20 of the vehicle body 3, the tire-position maximum widths W21 on the left and right of the vehicle body 3, the tread width W22 of the vehicle body 3, the length L20 of the vehicle body 3, and/or the like, are stored in advance in the transport determiner 54 or the controller 40 as vehicle size information (specification information), and can be acquired by the transport determiner 54 or the controller 40 referring to the vehicle size information. The length L20 of the vehicle body 3 may be corrected in accordance with the raising/lowering position of the coupler (raising/lowering device) 8 because the rear end of the coupler (raising/lowering device) 8 (the rear end of the lower link 8b) changes by raising or lowering the coupler (raising/lowering device) 8.

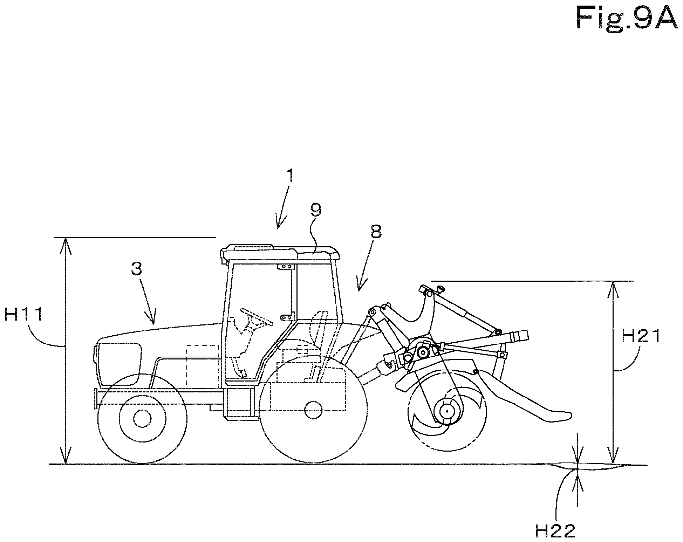

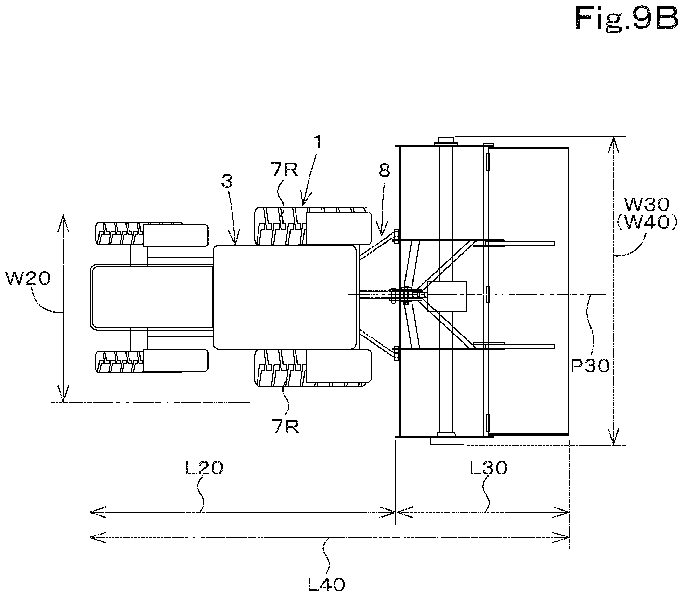

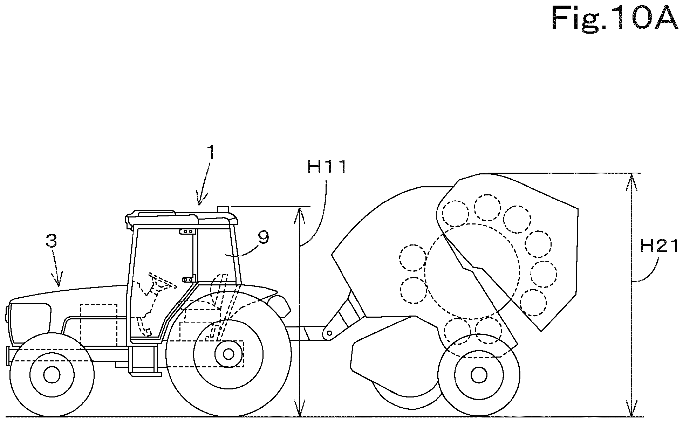

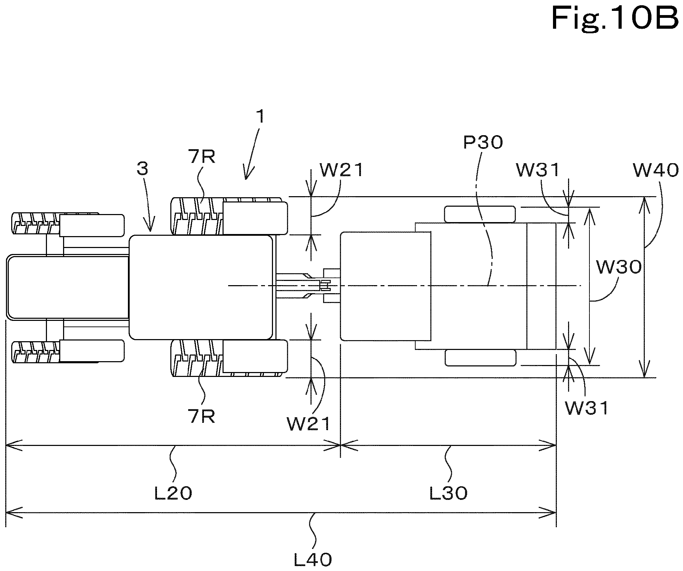

FIGS. 9A and 9B are a side view and a plan view, respectively, of the working vehicle 1 with a cultivator attached. FIGS. 10A and 10B are a side view and a plan view, respectively, of the working vehicle 1 with a baler attached. FIGS. 9A to 10B are examples of the working device and are not limited thereto.

As illustrated FIGS. 9A to 10B, the working device condition includes attached heights H21 and H22, an attached width W30, an overall width W40, a length L30 of the working device 2, and a wheel width W31 when the working device 2 is attached.

As illustrated in FIG. 9A, when the working device 2 is coupled to the working vehicle 1 in a floating state by the coupler (raising/lowering device) 8 (when cantilevered), the attached height H21 is a vertical distance from the front wheel 7F or the rear wheels 7R to the highest portion of the working device 2. The attached height H22 is a vertical distance from the front wheels 7F or the rear wheels 7R to the lowest portion of the working device 2.

As illustrated in FIG. 10A, when the working device 2 includes wheels that come into contact with the road K2, the attached height H21 is a vertical distance from the front wheels 7F or the rear wheels 7R to the highest portion of the working device 2.

As illustrated in FIGS. 9B and 10B, the attached width W30 is the width of the working device 2, and is a straight distance between a left end portion and a right end portion of the working device 2. As illustrated in FIGS. 9B and 10B, when a widthwise center P30 of the working device 2 coincides with a widthwise center P40 of the working vehicle 1 (when the working device 2 is attached to the working vehicle 1 without being offset leftward or rightward), the offset width of the working device 2 is zero. In contrast, when the widthwise center P30 of the working device 2 deviates leftward or rightward from the widthwise center P40 of the working vehicle 1, the offset width of the working device 2 is a distance from the widthwise center P40 of the working vehicle 1 to one of the opposite edges in the width direction of the working vehicle 1 that is closer to the working vehicle 1.

Assuming that the working vehicle 1 and the working device 2 are combined by coupling the working device 2 to the working vehicle 1, the overall width W40 is the width of the agricultural machine including the working vehicle 1 and the working device 2. As illustrated in FIG. 9B, when the working device 2 is attached to the working vehicle 1 without being offset and the attached width W30 of the working device 2 is larger than the vehicle body width W20 of the vehicle body 3, the overall width W40 is the same as the attached width W30. As illustrated in FIG. 10B, when the working device 2 is attached to the working vehicle 1 without being offset and the attached width W30 of the working device 2 is smaller than the vehicle body width W20 of the vehicle body 3, the overall width W40 is the vehicle body width W20. In contrast, when the working device 2 is attached in an offset manner with respect to the working vehicle 1, the overall width W40 is the sum of a half of the vehicle body width W20 of the vehicle body 3, the offset width, and the attached width W30.

As illustrated in FIGS. 9B and 10B, the length L30 of the working device 2 is a straight distance from the front end to the rear end of the working device 2.

When the working vehicle 1 and a wheeled working device 2 are combined as illustrated in FIG. 10B and when the agricultural machine is viewed from the front, the tire-position maximum width W21 on the left of the vehicle body 3 is a horizontal distance between a leftmost protruding portion and a rightmost protruding portion of wheels located on the left of the working device 2, that is, the front wheel 7F and the rear wheel 7R located on the left of the vehicle body 3. The tire-position maximum width W21 on the right of the vehicle body 3 is a horizontal distance between a leftmost protruding portion and a rightmost protruding portion of wheels located on the right of the working device 2, that is, the front wheel 7F and the rear wheel 7R located on the right of the vehicle body 3.

The operator or the like inputs the attached heights H21 and H22, the attached width W30, the overall width W40, the offset width, the length L30 of the working device 2, and/or the wheel width W31 described above on the input screen displayed on the display 50. Thus, the transport determiner 54 or the controller 40 can acquire these values. Note that a database of specifications or the like of the working device 2 may be stored in the storage unit 45, and when the working device 2 is coupled to the working vehicle 1, the attached heights H21 and H22, the attached width W30, the overall width W40, the offset width, the length L30 of the working device 2, and/or the wheel width W31 may be read from the database, so that the transport determiner 54 or the controller 40 acquires these values. In this case, since the attached heights H21 and H22 are changed with raising or lowering of the coupler (raising/lowering device) 8, the attached heights H21 and H22 may be corrected in accordance with the raising or lowering of the coupler (raising/lowering device) 8.

As described above, the working vehicle 1 (controller 40) can acquire the surrounding condition (the road condition, the transport vehicle condition, and the bridge plate condition) and the device condition (the vehicle condition, the working device condition) before the start of the loading automatic operation.

Specifically, the transport determiner 54 determines whether a first precondition, a second precondition, and a third precondition described below are satisfied based on the surrounding condition (the road condition, the transport vehicle condition, and the bridge plate condition) and the device condition (the vehicle condition, the working device condition). When determining that all the first to third preconditions are satisfied, the transport determiner 54 determines that it is possible to perform loading. When determining that at least one of the first to third preconditions is not satisfied, the transport determiner 54 determines that it is not possible to perform loading. The first precondition is a condition in which the location is appropriate as a loading location or appropriate as an unloading location by automatic operation. Specifically, when the working vehicle 1 is to be loaded onto the transport vehicle 80, the first precondition is a condition in which at least the surrounding condition from the current position of the working vehicle 1 to the transport vehicle 80 is appropriate as a loading location. The first precondition is a condition in which, when the working vehicle 1 is to be unloaded from the transport vehicle 80, at least the surrounding condition from the position at which the bridge plate 82 is in contact with the ground (unloading start position) to the position at which the working vehicle 1 is separated from the transport vehicle 80 and the unloading ends (unloading end position) is appropriate as an unloading location.

The second precondition and the third precondition are conditions of the transport vehicle 80 (transport vehicle conditions) in which the transport vehicle 80 is in a state in which the transport vehicle 80 can perform loading or unloading. For example, the second precondition is a condition in which the position and inclination of the bridge plates 82 are appropriate. The third precondition is a condition in which there is a loading space on the loading platform of the truck. Although the second precondition and the third precondition are given as examples of the transport vehicle conditions, the transport vehicle conditions are not limited to the second precondition and the third precondition.

### <First precondition>

As illustrated in FIGS. 7A and 7B, the transport determiner 54 acquires the road condition (the depression/bump 101 of the road K2, the width W1 and height H1 of the structure 102, and the road width W5 of the road K2) as sensed data (that is, data indicating the surrounding condition in front of the working vehicle 1) obtained by sensing by the sensor 41L in the state in which the working vehicle 1 is located behind the transport vehicle 80. Also, the transport determiner 54 refers to the vehicle condition (the vehicle body height H11 of the vehicle body 3, the vehicle body width W20, the length L20 of the vehicle body 3) and the working device condition (the attached heights H21 and H22, the attached width W30, the overall width W40, the length L30 of the working device 2, the wheel width W31).

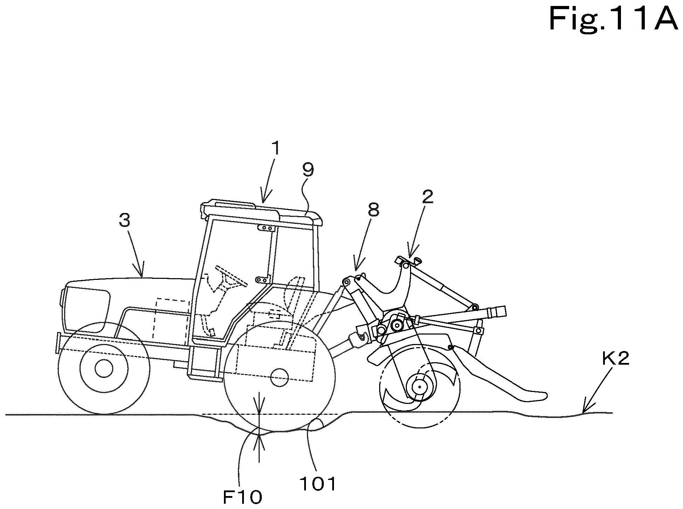

As illustrated in FIG. 11A, when there is a depression/bump 101 in front of the vehicle body 3 and there is a possibility that, when the entire vehicle body 3 is lowered because a rear wheel 7R passes over the depression/bump 101, the lower end of the working device 2 will come into contact with the road K2, the transport determiner 54 determines that the current location is not appropriate as a loading location for loading by automatic operation. That is, the transport determiner 54 determines that the first precondition is not satisfied. More specifically, the transport determiner 54 estimates whether the rear wheel 7R will sink into the depression/bump 101 based on the width W10, the length L10, and the depth F10 of the depression/bump 101. For example, when the width W10 of the depression/bump 101 is larger than the tread width of the rear wheel 7R, and when the length L10 of the depression/bump 101 is larger than the outer wheel diameter of the rear wheel 7R, the transport determiner 54 estimates that the rear wheel 7R will sink into the depression/bump 101. After the estimation that the rear wheel 7R will sink into the depression/bump 101, the transport determiner 54 compares the depth F10 of the depression/bump 101 with the attached height H22. When the depth F10 of the depression/bump 101 is larger than the attached height H22 (F10 > H22), or when the attached height H22 is larger than the depth F10 of the depression/bump 101 (H22 > F10) and the difference between the attached height H22 and the depth F10 of the depression/bump 101 (H22 - F10) is a first threshold or less, the transport determiner 54 determines that the depression/bump 101 does not satisfy the first precondition.

When the width W10 of the depression/bump 101 is smaller than the tread width of the rear wheel 7R, the transport determiner 54 estimates that the rear wheel 7R will not sink into the depression/bump 101, estimates that travel is possible, and determines that the first precondition is satisfied as to the depression/bump 101.

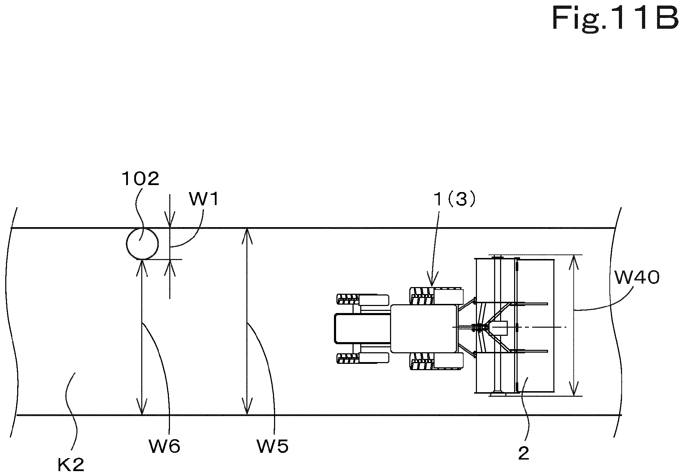

As illustrated in FIG. 11B, when a structure 102 is present in front of the vehicle body 3, the transport determiner 54 calculates a road width W6 at the location where the structure 102 is present (road width W6 = road width W5 - width W1 of structure 102) and the overall width W40. When the overall width W40 is larger than the road width W6 (W40 > W6), or when the difference between the road width W6 and the overall width W40 (W6 - W40) is a second threshold or less, the transport determiner 54 estimates that it is not possible for the vehicle body 3 to travel, and determines that the first precondition is not satisfied as to the structure 102.

In contrast, when the road width W6 is larger than the overall width W40 and exceeds the second threshold (W6 - W40 > second threshold), the transport determiner 54 estimates that it is possible to perform travel, and determines that the first precondition is not satisfied as to the structure 102.

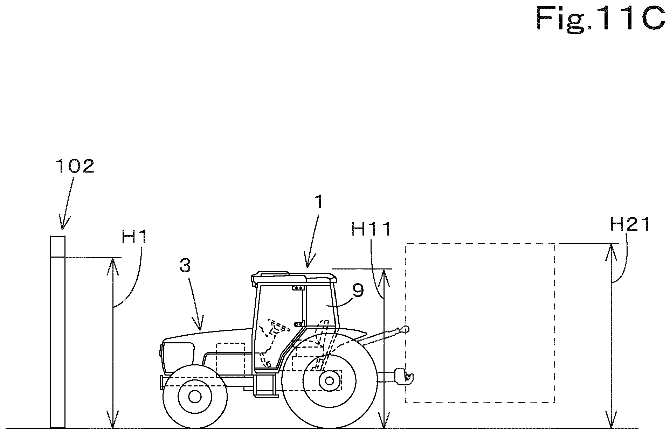

As illustrated in FIG. 11C, when there is a structure 102 in front of the vehicle body 3 and the structure 102 is a structure installed above the road K2 (gate, streetlight, pedestrian overpass, bridge pier, sign), the transport determiner 54 compares the height H1 at the location where the structure 102 is present with the vehicle body height H11 and compares the height H1 with the attached height H21. When the vehicle body height H11 is higher than the height H1 of the structure 102 (H1 < H11), or when the attached height H21 is higher than the height H1 of the structure 102 (H1 < H21), the transport determiner 54 estimates that it is not possible to perform travel, and determines that the first precondition is not satisfied as to the structure 102.

When the vehicle body height H11 is lower than the height H1 of the structure 102 and the difference between the height H1 of the structure 102 and the vehicle body height H11 (H1 - H11) is a third threshold or less, or when the attached height H21 is lower than the height H1 of the structure 102 and the difference between the height H1 of the structure 102 and the attached height H21 (H1- H21) is the third threshold or less, the transport determiner 54 also estimates that it is not possible to perform travel, and determines that the first precondition is not satisfied as to the structure 102.

In contrast, when the vehicle body height H11 is lower than the height H1 of the structure 102 and the difference between the height H1 of the structure 102 and the vehicle body height H11 (H1 - H11) exceeds the third threshold, and the attached height H21 is lower than the height H1 of the structure 102 and the difference between the height H1 of the structure 102 and the attached height H21 (H1 - H21) exceeds the third threshold, the transport determiner 54 estimates that it is possible to perform travel, and determines that the first precondition is not satisfied as to the structure 102.

When the road width W5 of the road K2 in front of the vehicle body 3 changes, the transport determiner 54 compares the road width W5 with the vehicle body width W20. When the road width W5 is smaller than the vehicle body width W20 (W5 < W20), or when the road width W5 is larger than the vehicle body width W20 and the difference between the road width W5 and the vehicle body width W20 (W5 - W20) is a fourth threshold or less, the transport determiner 54 estimates that it is not possible to perform travel, and determines that the first precondition is not satisfied as to the road width W5.

In contrast, when the road width W5 is larger than the vehicle body width W20 and the difference between the road width W5 and the vehicle body width W20 (W5 - W20) exceeds the fourth threshold, the transport determiner 54 estimates that it is possible to perform travel, and determines that the first precondition is satisfied as to the road width W5.

When the overall width W40 is larger than the vehicle body width W20 (W40 > W20), the transport determiner 54 compares the road width W5 with the overall width W40. When the overall width W40 is larger than the road width W5 (W5 < W40), or when the road width W5 is larger than the overall width W40 and the difference between the road width W5 and the overall width W40 (W5 - W40) is the fourth threshold or less, the transport determiner 54 estimates that it is not possible to perform travel, and determines that the first precondition is not satisfied as to the road width W5. In contrast, when the overall width W40 is smaller than the road width W5 and the difference between the road width W5 and the overall width W40 (W5 - W40) exceeds the fourth threshold, the transport determiner 54 estimates that it is possible to perform travel, and determines that the first precondition is not satisfied as to the road width W5.

As described above, the transport determiner 54 determines that the first precondition is satisfied when determining that the conditions are satisfied as to all of the depression/bump 101, the structure 102, and the road width W5.

### <Second precondition>

Next, the transport determiner 54 determines whether the second precondition is satisfied. Specifically, as illustrated in FIGS. 7A and 7B, when the working vehicle 1 is located behind the transport vehicle 80, the transport determiner 54 acquires the bridge plate condition (the presence or absence of the pair of bridge plates 82, the width W7 of each of the pair of bridge plates 82, the center-to-center distance W8 between the pair of bridge plates 82, the positions of the pair of bridge plates 82 (for example, including the widthwise positions of the ends of the pair of bridge plates 82 that are near the transport vehicle 80 and the ends of the pair of bridge plates 82 that are near the ground), and the angle θ1 of the bridge plates 82 with respect to the ground) as sensed data (that is, data indicating the surrounding condition in front of the working vehicle 1) obtained by sensing by the sensor 41L.

As the positions of the pair of bridge plates 82, the sensor 41L detects, for example, the widthwise positions of the ends of the pair of bridge plates 82 that are near the transport vehicle 80 and the widthwise positions of the ends of the pair of bridge plates 82 that are near the ground. Then, the transport determiner 54 determines whether the widthwise positions of the pair of bridge plates 82 are within a predetermined range (whether they are not slanted). That is, the transport determiner 54 can determine whether the degree of being parallel of the pair of bridge plates 82 is within a prescribed range of degrees of being parallel, that is, whether the pair of bridge plates 82 are arranged in parallel or substantially in parallel. When the degree of being parallel of the pair of bridge plates 82 exceeds the prescribed range of degrees of being parallel, the transport determiner 54 estimates that it is not possible for the vehicle body 3 to travel, and determines that the second precondition is not satisfied as to the positions of the bridge plates 82.

In contrast, when the degree of being parallel of the pair of bridge plates 82 is within the prescribed range of degrees of being parallel, the transport determiner 54 estimates that it is possible to perform travel over the pair of bridge plates 82, and determines that the second precondition is satisfied as to the positions of the pair of bridge plates 82.

The transport determiner 54 refers to the vehicle condition (2WD or 4WD of the vehicle body 3, the tire-position maximum width W21 of the vehicle body 3, the tread width W22 of the vehicle body 3, the widthwise center P40 of the working vehicle 1) and the working device condition (the presence of wheels of the working device 2, the tire width of the working device 2, whether the tire width is included in the tire-position maximum width W21 of the vehicle body 3, the tread width of the working device 2, whether the tread width coincides with the tread width of the vehicle body 3, the center P30 of the working device 2).

When the sensor 41L cannot identify (detect) the pair of bridge plates 82, the transport determiner 54 determines that the second precondition is not satisfied. As illustrated in FIG 7B, when there is a pair of bridge plates 82, the transport determiner 54 calculates the width W7 of each of the pair of bridge plates 82 and the tire-position maximum width W21 of the vehicle body 3. When the tire-position maximum width W21 of the vehicle body 3 is larger than the width W7 of a corresponding one of the pair of bridge plates 82 (W21 > W7), or when the difference between the tire-position maximum width W21 and the width W7 of the corresponding one of the pair of bridge plates 82 (W21 - W7) is a fifth threshold or less, the transport determiner 54 estimates that it is not possible for the vehicle body 3 to travel, and determines that the second precondition is not satisfied as to the widths of the pair of bridge plates 82.

In contrast, when the width W7 of the corresponding one of the pair of bridge plates 82 is larger than the tire-position maximum width W21 of the vehicle body 3 and exceeds the fifth threshold (W7 - W21 > fifth threshold), the transport determiner 54 estimates that it is possible to perform travel over the pair of bridge plates 82, and determines that the second precondition is satisfied as to the widths of the pair of bridge plates 82.

Further, as illustrated in FIG. 7B, when the second precondition is satisfied as to the width of each of the pair of bridge plates 82, the transport determiner 54 calculates the center-to-center distance W8 of the pair of bridge plates 82 and the tread width W22 of the vehicle body 3. When the difference between the center-to-center distance W8 of the pair of bridge plates 82 and the tread width W22 of the vehicle body 3 (W8 - W22) exceeds a sixth threshold, the transport determiner 54 estimates that the center-to-center distance W8 does not match the tread width W22, and determines that the second precondition is not satisfied as to the distance between the pair of bridge plates 82.

In contrast, when the difference between the center-to-center distance W8 of the pair of bridge plates 82 and the tread width W22 of the vehicle body 3 (W8 - W22) is the sixth threshold or less, the transport determiner 54 estimates that travel is possible on the pair of bridge plates 82, and determines that the second precondition is satisfied as to the distance between the pair of bridge plates 82.

As illustrated in FIG. 7A, the transport determiner 54 refers to the angle θ1 of each of the pair of bridge plates 82. When the angle θ1 of each of the pair of bridge plates 82 is a seventh threshold or more, and when the drive specifications of the vehicle body 3 are 2WD and the driving force (propelling force) is lower than that of 4WD, the transport determiner 54 estimates that it is not possible for the vehicle body 3 to travel, and determines that the second precondition is not satisfied as to the angle θ1 of each of the pair of bridge plates 82.

In contrast, when the drive specifications of the vehicle body 3 are 4WD and the driving force (propelling force) is high, the transport determiner 54 estimates that it is not possible for the vehicle body 3 to travel even though the angle θ1 of each of the pair of bridge plates 82 is the seventh threshold or more and of an eighth threshold (seventh threshold < eighth threshold), and determines that the second precondition is satisfied as to the angle θ1 of each of the pair of bridge plates 82 as long as the driving force (propelling force) of the vehicle body 3 is 4WD.

When the angle θ1 of each of the pair of bridge plates 82 is less than the seventh threshold, the transport determiner 54 estimates that it is possible for the vehicle body 3 to travel, and determines that the second precondition is satisfied as to the angle θ1 of each of the pair of bridge plates 82 regardless of whether the driving force (propelling force) of the vehicle body 3 is 2WD or 4WD.

As described above, the transport determiner 54 determines that the second precondition is satisfied when determining that all of the conditions are satisfied as to the width of each of the pair of bridge plates 82, the distance between the pair of bridge plates 82, and the angle θ1 of the pair of bridge plates 82.

### <Third precondition>

Next, the transport determiner 54 determines whether the third precondition is satisfied. Specifically, as illustrated in FIGS. 7A and 7B, when the working vehicle 1 is located behind the transport vehicle 80, the transport determiner 54 acquires the transport vehicle condition (the presence or absence of the transport vehicle 80, the lateral width W9 of the loading platform 81 of the transport vehicle 80, the length L6 of the loading platform 81, the presence or absence of the obstacle 103 on the loading platform 81, the width W103 of the loading platform 81 at the location where the obstacle 103 is present) as sensed data obtained by sensing by the sensor 41L (that is, data indicating the surrounding condition in front of the working vehicle 1). The transport determiner 54 also refers to the vehicle condition (the vehicle body width W20 of the vehicle body 3, the length L20 of the vehicle body 3) and the working device condition (the presence of wheels of the working device 2, the length L30 of the working device 2, the attached width W30, the overall width W40).

As illustrated in FIG. 7B, when there is the transport vehicle 80 in front of the vehicle body 3 and there is no obstacle 103 on the loading platform 81, the transport determiner 54 calculates the lateral width W9 of the loading platform 81 of the transport vehicle 80 and the overall width W40. When the overall width W40 is larger than the road width W6 (W40 > W9), or when the difference between the lateral width W9 and the overall width W40 (W9 - W40) is a ninth threshold or less, the transport determiner 54 estimates that it is not possible to perform loading onto the loading platform 81 of the transport vehicle 80, and determines that the third precondition is not satisfied as to the lateral width W9 of the loading platform 81 of the transport vehicle 80.

In contrast, when the lateral width W9 is larger than the overall width W40 and exceeds the ninth threshold (W9 - W40 > ninth threshold), the transport determiner 54 estimates that it is possible to perform loading onto the loading platform 81 of the transport vehicle 80, and determines that the third precondition is satisfied as to the lateral width W9 of the loading platform 81 of the transport vehicle 80.

When the working device 2 is coupled, as illustrated in FIGS. 9B and 10B, the transport determiner 54 calculates a total length L40 which is the sum of the length L30 of the working device 2 and the length L20 of the vehicle body 3, and the length L6 of the loading platform 81 of the transport vehicle 80. When the total length L40 is larger than the length L6 of the loading platform 81 (L40 > L6), or when the difference between the length L6 and the total length L40 (L6 - L40) is a tenth threshold or less, the transport determiner 54 estimates that it is not possible to perform loading onto the loading platform 81 of the transport vehicle 80, and determines that the third precondition is not satisfied as to the length L6 of the loading platform 81 of the transport vehicle 80.

In contrast, when the working device 2 is coupled and the difference between the length L6 of the loading platform 81 and the total length L40 (L6 - L40) exceeds the tenth threshold (L6 - L40 > tenth threshold), the transport determiner 54 estimates that it is possible to perform loading onto the loading platform 81 of the transport vehicle 80, and determines that the third precondition is satisfied as to the length L6 of the loading platform 81 of the transport vehicle 80.

When the working device 2 is not coupled (that is, when the working vehicle 1 is used alone), the transport determiner 54 calculates the length L6 of the loading platform 81 of the transport vehicle 80 and the length L20 of the vehicle body 3. When the length L20 of the vehicle body 3 is larger than the length L6 of the loading platform 81 (L20 > L6), or when the difference between the length L6 and the length L20 (L6 - L20) is an eleventh threshold or less, the transport determiner 54 estimates that it is not possible to perform loading onto the loading platform 81 of the transport vehicle 80, and determines that the third precondition is not satisfied as to the length L6 of the loading platform 81 of the transport vehicle 80.

In contrast, when the working device 2 is not coupled and the difference between the length L6 of the loading platform 81 and the length L20 of the vehicle body 3 (L6 - L20) exceeds the eleventh threshold (L6 - L20 > eleventh threshold), the transport determiner 54 estimates that it is possible to perform loading onto the loading platform 81 of the transport vehicle 80, and determines that the third precondition is satisfied as to the length L6 of the loading platform 81 of the transport vehicle 80.

As illustrated in FIG. 7B, when there is a transport vehicle 80 in front of the vehicle body 3 and there is an obstacle 103 on the loading platform 81, the transport determiner 54 calculates the width W103 of the loading platform 81 at the location where the obstacle 103 is present and the overall width W40. When the overall width W40 is larger than the width W103 (W40 > W103), or when the difference between the width W103 and the overall width W40 (W103 - W40) is a twelfth threshold or less, the transport determiner 54 estimates that it is not possible to perform loading onto the loading platform 81 of the transport vehicle 80, and determines that the third precondition is not satisfied as to the width W103 of the loading platform 81 at the location where the obstacle 103 of the transport vehicle 80 is present.

In contrast, when the width W103 is larger than the overall width W40 and exceeds the twelfth threshold (W103 - W40 > twelfth threshold), the transport determiner 54 estimates that it is possible to perform loading onto the loading platform 81 of the transport vehicle 80, and determines that the third precondition is satisfied as to the width W103 of the loading platform 81 at the location where the obstacle 103 of the transport vehicle 80 is present. Alternatively, when the obstacle 103 is present on the loading platform 81, the following configuration may be used. (i) In the loading automatic operation, automatic operation is performed such that the working vehicle etc. is loaded while avoiding the obstacle 103, or (ii) the positions and angle of the bridge plates 82 (second precondition) are set such that the working vehicle 1 does not interfere with the obstacle 103 even if the working vehicle 1 travels straight.

As described above, the transport determiner 54 determines that the third precondition is satisfied when determining that the conditions are satisfied as to all of the lateral width W9 of the loading platform 81, the length L6 of the loading platform 81, and the width W103 of the loading platform 81 at the location where the obstacle 103 is present.

### <Posture (inclination) of transport vehicle>

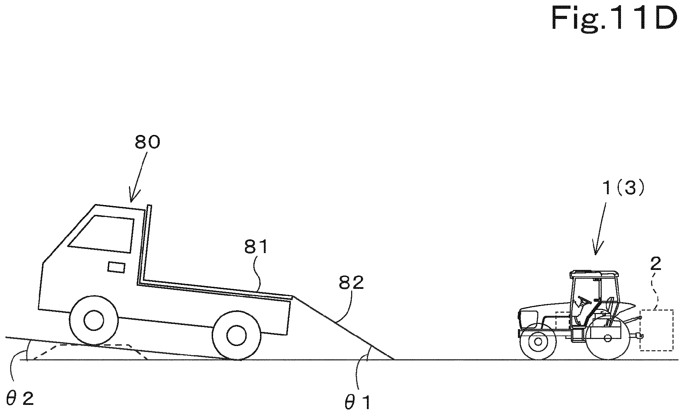

The posture of the transport vehicle 80 may be detected as sensed data obtained by sensing by the sensor 41L. As illustrated in FIG. 11D, when an inclination angle θ2 in the front-rear direction of the transport vehicle 80 with respect to the ground is a predetermined value or more (front-up posture, front-down posture), the transport determiner 54 may determine that the transport vehicle condition is not satisfied as to the posture of the transport vehicle 80, and when the inclination angle θ2 in the front-rear direction of the transport vehicle 80 is less than the predetermined value, the transport determiner 54 may determine that the transport vehicle condition is satisfied as to the posture of the transport vehicle 80.

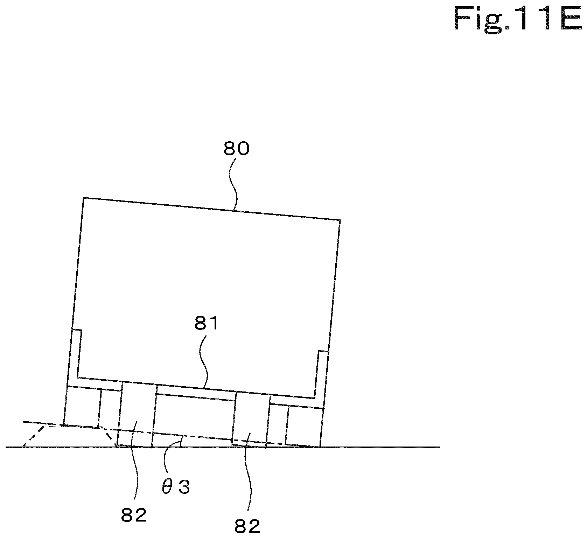

As illustrated in FIG. 11E, when an inclination angle θ3 in the width direction of the transport vehicle 80 is a predetermined value or more, the transport determiner 54 may determine that the transport vehicle condition is not satisfied as to the posture of the transport vehicle 80, and when the inclination angle θ3 in the width direction of the transport vehicle 80 is less than the predetermined value, the transport determiner 54 may determine that the transport vehicle condition is satisfied as to the posture of the transport vehicle 80.

The transport determiner 54 performs determination on the first precondition and the transport vehicle condition (the second precondition, the third precondition) in a predetermined order. For example, the predetermined order is the order of the third precondition, the first precondition, and the second precondition. The order is not limited to this order, and any order may be selected. When it is determined that one precondition is not satisfied and the other preconditions are not determined yet, the transport determiner 54 may skip the determination on the other preconditions, or may execute determination on all of the first to third preconditions.

When the transport determiner 54 determines that it is possible to perform loading onto the transport vehicle 80, the controller 40 causes the automatic operation controller 40E to perform automatic operation (for example, autonomous automatic operation). Even during the loading automatic operation, the automatic operation controller 40E acquires the surrounding condition (the road condition, the transport vehicle condition, and the bridge plate condition) and the device condition (the vehicle condition, the working device condition), and performs the loading automatic operation while autonomously evaluating the acquired surrounding condition. With this, the working vehicle 1 (see FIG. 5A) located behind the transport vehicle 80 is loaded onto the loading platform 81 of the transport vehicle 80 by automatic operation (see FIG. 5B). In contrast, when the transport determiner 54 determines that it is possible to perform unloading from the transport vehicle 80, the controller 40 causes the automatic operation controller 40E to perform automatic operation (for example, autonomous automatic operation). Even during the unloading automatic operation from the transport vehicle 80, the automatic operation controller 40E acquires the surrounding condition (the road condition, the transport vehicle condition, and the bridge plate condition) and the device condition (the vehicle condition, the working device condition), and performs the unloading automatic operation while autonomously evaluating the acquired surrounding condition. With this, the working vehicle 1 (see FIG. 5B) loaded on the loading platform 81 of the transport vehicle 80 is unloaded to a position behind the transport vehicle 80 by automatic operation (see FIG. 5A).

As illustrated in FIG. 3, the working vehicle 1 includes a communication device 55. The communication device 55 is a communication module that performs direct communication or indirect communication with an external device 56. For example, the communication device 55 can perform wireless communication via, for example, Wireless Fidelity (Wi-Fi, registered trademark) which is an IEEE802.11 standard, Bluetooth (registered trademark) Low Energy (BLE), Low Power, Wide Area (LPWA), Low-Power Wide-Area Network (LPWAN), or the like which are communication standards. The communication device 55 can perform wireless communication by, for example, a mobile phone communication network or a data communication network. The communication device 55 transmits information relating to loading/unloading of the agricultural machine to the transport vehicle 80 under the control of the controller 40 or the transport determiner 54. For example, when the transport determiner 54 determines that it is not possible to perform loading or unloading, the communication device 55 transmits, as the information, the determination to the transport vehicle 80. The term "Unloading" herein refers to discharging the working vehicle 1. Examples of the information include information indicating the results of determination as to the first to third preconditions by the transport determiner 54 (information indicating that at least one of the road condition, the transport vehicle condition, or the bridge plate condition is not appropriate) and vehicle size information of the agricultural machine (for example, the tire-position maximum width W21 of the vehicle body 3, the tread width W22 of the vehicle body 3, and the like, described later).

The controller 40 of the working vehicle 1 or a controller 86 of the transport vehicle 80 may acquire updated vehicle size information based on first vehicle size information of the agricultural machine (the overall height, overall length, overall width, and overall weight of the working vehicle 1 and the working device 2) and second vehicle size information of the transport vehicle 80 (the overall height, overall length, overall width, and overall weight of the transport vehicle 80). For example, the communication device 55 of the working vehicle 1 may transmit the first vehicle size information of the agricultural machine from the working vehicle 1 to the transport vehicle 80 under the control of the controller 40. The controller 86 of the transport vehicle 80 calculates updated vehicle size information based on the first vehicle size information of the agricultural machine transmitted from the working vehicle 1 and the second vehicle size information of the transport vehicle 80 stored in advance in a memory 813. The updated vehicle size information is vehicle size information including information obtained by combining the information about both vehicles (the transport vehicle 80 and the agricultural machine loaded on the transport vehicle 80), and includes at least one of information of the overall height, information of overall length, information of overall width, or information of overall weight. The overall height is higher of (i) the sum of the height of the loading platform 81 of the transport vehicle 80 and the height of the agricultural machine (the height of the higher of the working vehicle 1 and the working device 2 when the working device 2 is provided, or the height of the working vehicle 1 when the working device 2 is not provided), and (ii) the overall height of the transport vehicle 80. Since the agricultural machine is included within the area of a loading platform 80a, the overall length is equal to the overall length in the front-rear direction of the transport vehicle 80. Since the agricultural machine is included within the area of the loading platform 81, the overall width is equal to the overall width of the transport vehicle 80. The overall weight is the sum of the weight of the transport vehicle 80 and the weight of the agricultural machine (the total weight of the working vehicle 1 and the working device 2 when the working device 2 is provided, or the weight of the working vehicle 1 when the working device 2 is not provided). A communication device 84 may transmit the second vehicle size information of the transport vehicle 80 to the working vehicle 1, the controller 40 may calculate updated vehicle size information based on the first vehicle size information of the agricultural machine and the second vehicle size information of the transport vehicle 80, and the updated vehicle size information may be transmitted from the working vehicle 1 to the transport vehicle 80.

As illustrated in FIG. 3, the transport vehicle 80 includes the pair of bridge plates 82, an adjustment mechanism 83 capable of adjusting the positions of the pair of bridge plates 82, the communication device 84 capable of receiving information from the communication device 55 of the working vehicle 1, a display 85 such as a liquid crystal display, and the controller 86. The controller 86 is a device that performs various controls of the transport vehicle 80, and includes a CPU, electric/electronic circuit(s), and/or the like.

The communication device 84 is a communication module that performs direct communication or indirect communication with the communication device 55 of the working vehicle 1. For example, the communication device 55 can perform wireless communication via, for example, Wireless Fidelity (Wi-Fi, registered trademark) which is an IEEE802.11 standard, Bluetooth (registered trademark) Low Energy (BLE), Low Power, Wide Area (LPWA), Low-Power Wide-Area Network (LPWAN), or the like which are communication standards.

When the communication device 84 receives information indicating that the transport determiner 54 determines that loading or unloading cannot be performed, the display 85 displays a display screen relating to the determination. Examples of the display screen relating to the determination include a display screen indicating that loading or unloading cannot be performed, and a display screen indicating that at least one of the road condition, the transport vehicle condition, or the bridge plate condition is not appropriate. For example, the display screen indicating that the bridge plate condition is not appropriate includes a display screen indicating that the bridge plates 82 are not in an extended state (described later).

The adjustment mechanism 83 is a hydraulic driver that is capable of changing the state of the pair of bridge plates 82 between a retracted state in which the pair of bridge plates 82 are, for example, in an upright posture and an extended state in which the pair of bridge plates 82 are in a tilted posture in which the pair of bridge plates 82 are tilted rearward of the transport vehicle 80 illustrated in FIGS. 7A and 7B, and is capable of changing the center-to-center distance W8 between the pair of bridge plates 82. The adjustment mechanism 83 can perform a hydraulic driving operation including performing position adjustment so that the center-to-center distance W8 of the pair of bridge plates 82 matches the tread width W22 of the vehicle body 3 based on the vehicle size information (for example, information indicating the tread width W22 of the vehicle body 3) from the communication device 55 in, for example, the retracted state or the extended state. The adjustment mechanism 83 for the bridge plates 82 may have the function of adjusting the positions of connection between the bridge plates 82 and the loading platform 81 and/or the positions of connection between the bridge plates 82 and the ground, in addition to the function of changing the width between the pair of bridge plates 82.

As illustrated in FIG. 3, the external device 56 is a personal computer, a smartphone, a tablet computer, a PDA, a server, or the like. The external device 56 includes a display 57, a controller 77, and a communication device 78. The controller 77 controls the display 57 and the communication device 78. The communication device 78 receives information from the communication device 55 of the working vehicle 1. The display 57 can display various information transmitted from the working vehicle 1 (vehicle body 3). The communication device 55 of the working vehicle 1 transmits the vehicle size information of the agricultural machine to the external device 56 based on a transmission instruction from the operator when the transport vehicle 80 is a type of vehicle not including the adjustment mechanism 83 and the operator needs to manually bring the bridge plates 82 on the transport vehicle 80 into the extended state. The display 57 displays the vehicle size information of the agricultural machine (for example, the tire-position maximum width W21 of the vehicle body 3, the tread width W22 of the vehicle body 3). Alternatively or additionally, the communication device 55 may transmit travel information including the positions of the bridge plates 82 or the angle θ1 of the bridge plates 82 for the agricultural machine to pass over the bridge plates 82, to the external device 56 based on a transmission instruction from the operator. The display 57 displays the travel information of the agricultural machine (for example, information on current information (the current positions of the bridge plates 82 or the current angle θ1 of the bridge plates 82) and target information (the positions of the bridge plates 82 that satisfy the second precondition or the angle θ1 of the bridge plates 82 that satisfies the second precondition).

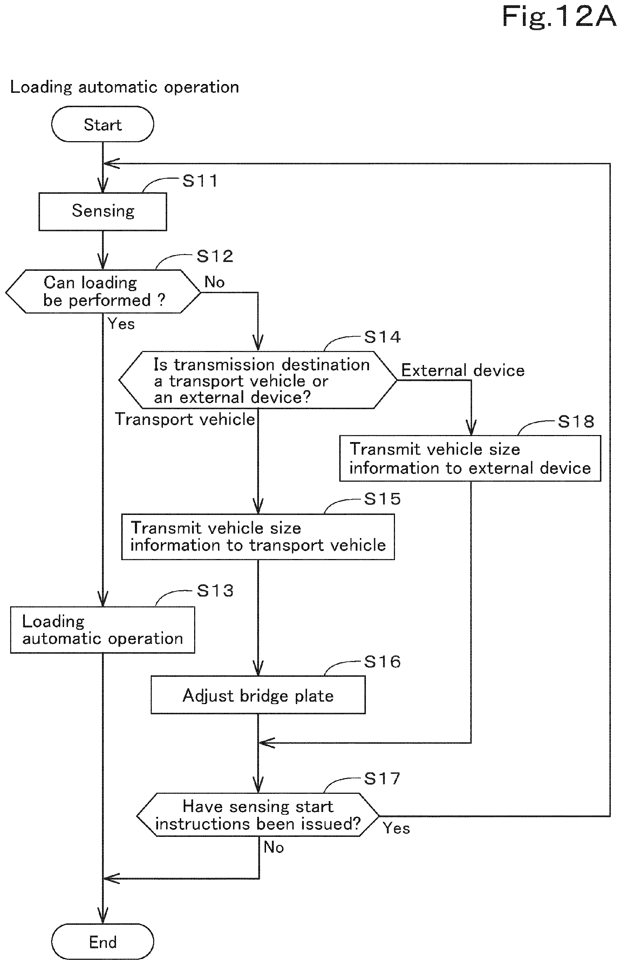

The following description discusses a process of loading automatic operation performed by a transport system for an agricultural machine with reference to FIG. 12A. As illustrated in FIGS. 5A, 7A, and 7B, assume that the working vehicle 1 is located behind the transport vehicle 80. When the selection switch 42L illustrated in FIG. 3 is operated by the operator, the controller 40 causes the display 50 to display the selection screen M2 as illustrated in FIG. 6. When the selection button 50a in the selection screen M2 is selected by the operator, the controller 40 starts the process of the loading automatic operation illustrated in FIG. 12A. The sensor 41L performs sensing before the start of the loading automatic operation (S11). As described earlier, the sensing is performed to sense the surrounding condition of the working vehicle 1 (for example, a surrounding condition in front of the working vehicle 1).

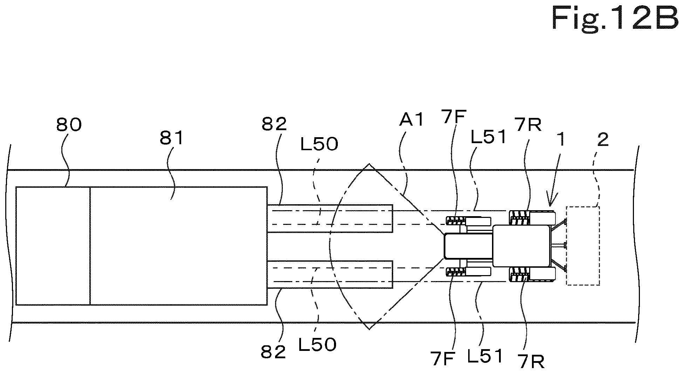

The transport determiner 54 determines whether the working vehicle 1 (vehicle body 3) can be loaded onto the transport vehicle 80 based on sensed data obtained by sensing by the sensor 41L (that is, data indicating the surrounding condition in front of the working vehicle 1) and the device condition in which the working device 2 is coupled to the working vehicle 1 (vehicle body 3) (S12). When the transport determiner 54 determines that all of the first precondition and the transport vehicle condition (the second precondition and the third precondition) are satisfied ("YES" in S12), the transport determiner 54 determines that it is possible to perform loading. Then, the controller 40 causes the automatic operation controller 40E to perform automatic operation (S13). For example, as illustrated in FIG. 12B, when it is possible to perform loading, the automatic operation controller 40E performs position adjustment of the working vehicle 1 behind the transport vehicle 80 so that extension lines L50 of the front wheels 7F of the working vehicle 1 and extension lines L51 of the rear wheels 7R of the working vehicle 1 overlap the bridge plates 82. If the extension lines L50 of the front wheels 7F of the working vehicle 1 and the extension lines L51 of the rear wheels 7R of the working vehicle 1 overlap the bridge plates 82 when the bridge plates 82 are adjusted, the position adjustment of the working vehicle 1 is not required.

Next, when the position adjustment is completed, the automatic operation controller 40E causes the working vehicle 1 to travel forward toward the transport vehicle 80 (bridge plates 82) (forward travel). During the forward travel, the automatic operation controller 40E refers to the condition of a predetermined range A1 (forward-travel surrounding condition) obtained by sensing by the sensor 41L. For example, the automatic operation controller 40E refers to the condition of the bridge plates 82 as the forward-travel surrounding condition. When the vertical positions, the widthwise positions, and/or the like of the bridge plates 82 change by a predetermined amount or more before the front wheels 7F of the working vehicle 1 reach the bridge plates 82, the automatic operation controller 40E stops the travel of the working vehicle 1. That is, during the forward travel, the automatic operation controller 40E stops the working vehicle 1 when the forward-travel surrounding condition indicates a condition in which the extension lines L50 of the front wheels 7F and the extension lines L51 of the rear wheels 7R of the working vehicle 1 may deviate from the bridge plates 82.

When the condition of the bridge plates 82 does not change when the working vehicle 1 is located short of the bridge plates 82, the automatic operation controller 40E continues the forward travel while referring to the condition of the bridge plates 82. That is, the automatic operation controller 40E performs the forward travel while referring to the forward-travel surrounding condition even after the front wheels 7F of the working vehicle 1 pass over the bridge plates 82.

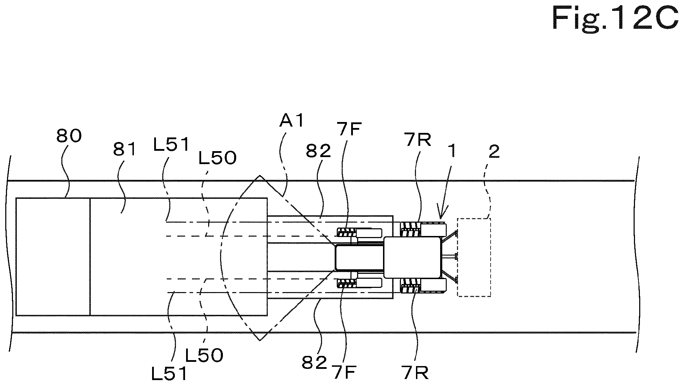

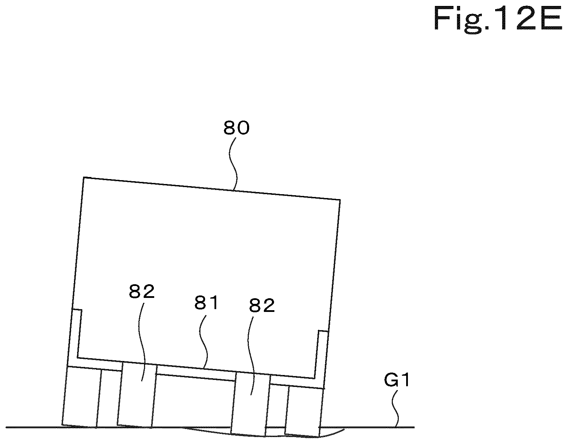

When the front wheels 7F of the working vehicle 1 has passed over the bridge plates 82 as illustrated in FIG. 12C, and when one of the opposite sides in the width direction (for example, the right side) of the transport vehicle 80 sinks into the ground G1 as illustrated in FIG. 12E and the transport vehicle 80 and/or the bridge plates 82 are lowered in the vertical direction, the automatic operation of the working vehicle 1 is stopped or the working vehicle 1 is moved backward to get off the bridge plates 82. Alternatively, when the working vehicle 1 tilts by a predetermined amount or more in a roll direction, the automatic operation controller 40E stops the automatic operation. Alternatively, when the widthwise positions of the bridge plates 82 move by a predetermined amount or more and the extension lines L50 of the front wheels 7F and the extension lines L51 of the rear wheels 7R of the working vehicle 1 are currently off the bridge plates 82, the automatic operation is stopped or the working vehicle 1 is moved backward to get off the bridge plates. That is, when the working vehicle 1 is climbing up the loading platform 81 of the transport vehicle 80, the working vehicle 1 monitors whether there is a positional deviation by a predetermined amount or more of the bridge plates 82, or monitors the inclination of the working vehicle 1. When loading may be hindered, the automatic operation is stopped or the working vehicle 1 is moved backward to get off the bridge plates 82.

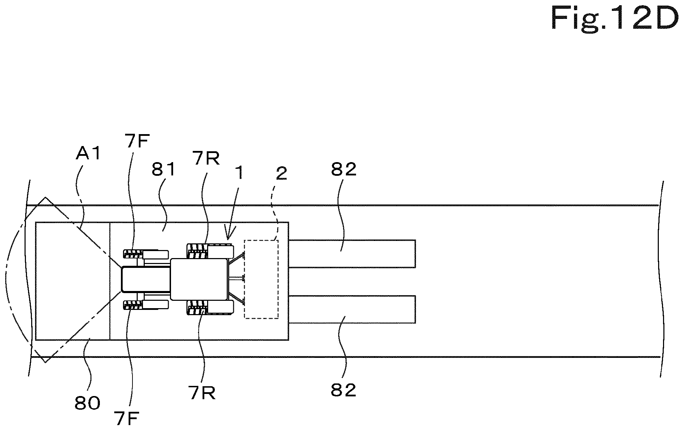

When the working vehicle 1 has passed over the bridge plates 82 and the rear wheels 7R of the working vehicle 1 have passed over the bridge plates 82 and reached the loading platform 81 as illustrated in FIG. 12D, the automatic operation controller 40E stops the automatic operation. That is, when the working vehicle 1 (see FIG. 5A) has been loaded from the location behind the transport vehicle 80 onto the loading platform 81 of the transport vehicle 80 by the automatic operation (see FIG. 5B), the automatic operation controller 40E ends the loading automatic operation and ends the process.

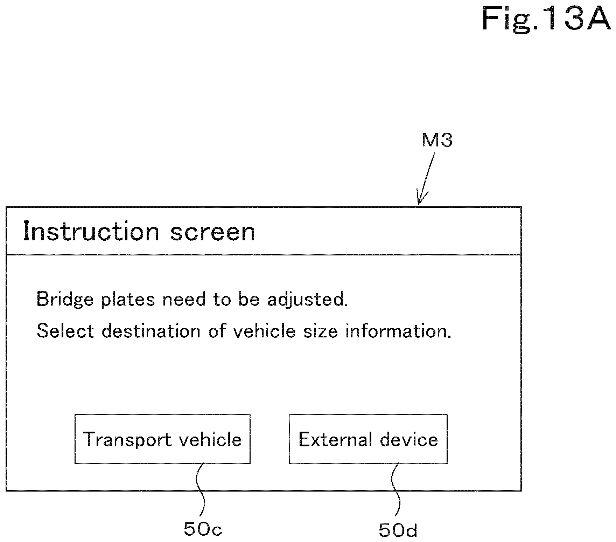

On the other hand, in S12, if the transport determiner 54 determines that at least one of the first precondition and the transport vehicle condition (the second precondition, the third precondition) is not satisfied ("NO" in S12), the transport determiner 54 determines that it is not possible to perform loading. Assume here that it is determined that the second precondition is not satisfied. Next, the controller 40 causes the display 50 to display an instruction screen M3 which provides a prompt for a designation of a transmission destination as illustrated in FIG. 13A (S14). Since it is determined that the second precondition is not satisfied here, the controller 40 causes a message indicating that the second precondition is not satisfied (for example, "Bridge plates need to be adjusted.") to be displayed on the instruction screen M3. When the first precondition is not satisfied, the controller 40 causes a message indicating that the first precondition is not satisfied (for example, "Road condition is inappropriate. Please move transport vehicle to another location.") to be displayed on the instruction screen M3. When the third precondition is not satisfied, the controller 40 causes a message indicating that the third precondition is not satisfied (for example, when the loading platform is small, "Loading space cannot be ensured on loading platform. ", and when there is an obstacle on the loading platform, "There is obstacle on loading platform, please remove obstacle.") to be displayed on the instruction screen M3.

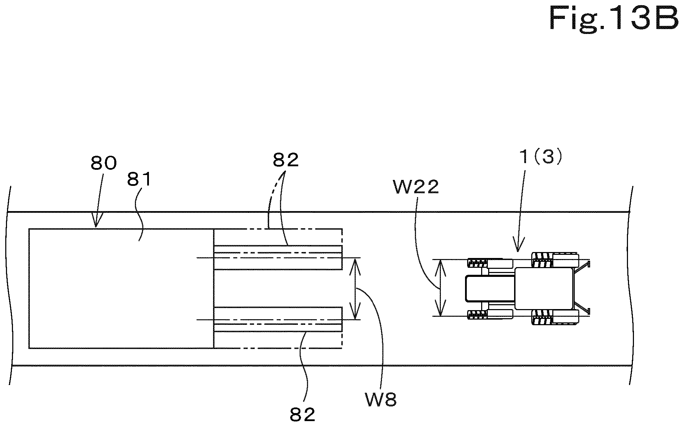

Then, when an instruction button 50c indicating "transport vehicle" on the instruction screen M3 is selected by the operator ("transport vehicle" in S14), the controller 40 causes the communication device 55 to transmit the vehicle size information of the agricultural machine to the transport vehicle 80 (S15). The adjustment mechanism 83 of the transport vehicle 80 adjusts the pair of bridge plates 82 (S16). Specifically, the adjustment mechanism 83 of the transport vehicle 80 performs a hydraulic driving operation including performing the position adjustment so that the center-to-center distance W8 of the pair of bridge plates 82 matches the tread width W22 of the vehicle body 3 as illustrated in FIG. 13B based on the vehicle size information (for example, information indicating the tread width W22 of the vehicle body 3) from the communication device 55. When the pair of bridge plates 82 are in the retracted state, the adjustment mechanism 83 brings the pair of bridge plates 82 into the extended state and then causes the center-to-center distance W8 of the pair of bridge plates 82 to match the tread width W22 of the vehicle body 3.

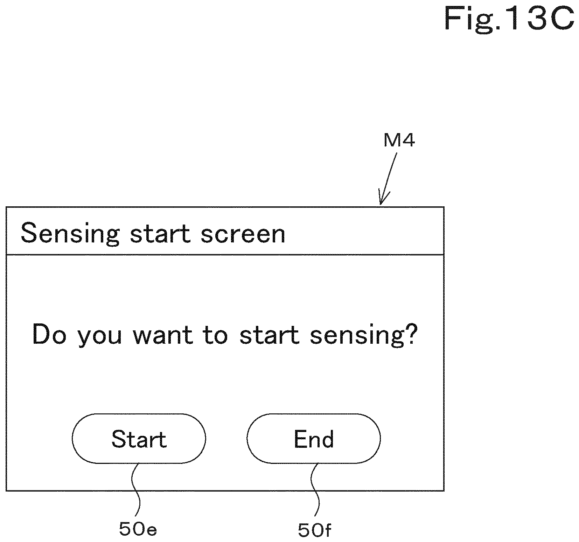

Then, the controller 40 causes the display 50 to display a sensing start screen M4 as illustrated in FIG. 13C. When a start button 50e on the sensing start screen M4 is selected by the operator ("YES" in S17), the controller 40 causes the sensor 41L to perform sensing again before the start of the loading automatic operation (S11). In contrast, when an end button 50f on the sensing start screen M4 is selected by the operator in S17, the controller 40 ends the process without performing the loading automatic operation.

In S14, when an instruction button 50d indicating "external device" on the instruction screen M3 is selected by the operator ("external device" in S14), the controller 40 causes the communication device 55 to transmit the vehicle size information of the agricultural machine to the external device 56 (S18). The external device 56 causes the display 57 to display the vehicle size information of the agricultural machine received by the communication device 84. The display 57 displays the vehicle size information of the agricultural machine (for example, the tire-position maximum width W21 of the vehicle body 3, the tread width W22 of the vehicle body 3). While looking at the display 57 of the external device 56, the operator can manually adjust the positions of the bridge plates 82 so that the center-to-center distance W8 of the pair of bridge plates 82 matches the tread width W22 of the vehicle body 3. When the external device 56 causes the display 57 to display the travel information (the positions of the bridge plates 82 or the angle θ1 of the bridge plates 82), the operator can manually adjust the positions and the inclination of the bridge plates 82 while viewing the travel information (the positions of the bridge plates 82 or the angle θ1 of the bridge plates 82) displayed on the display 57.

After the above-described manual adjustment by the operator is performed, when the start button 50e of the sensing start screen M4 is selected by the operator ("YES" in S17), the controller 40 causes the sensor 41L to perform sensing again before the start of the loading automatic operation (S11).

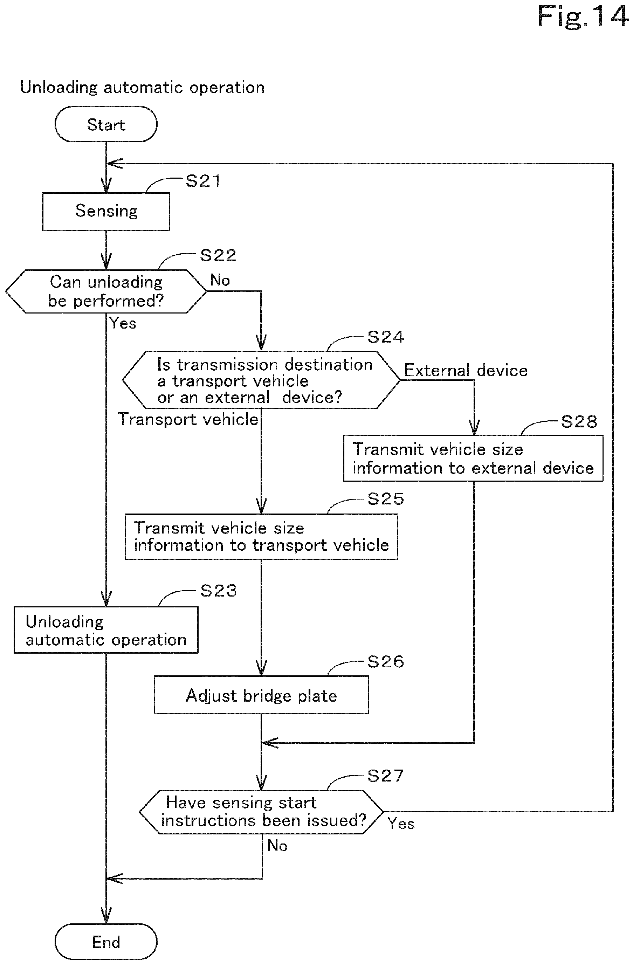

The following description discusses a process of unloading automatic operation performed by the transport system for an agricultural machine with reference to FIG. 14. Assume that, as illustrated in FIG. 5B, the working vehicle 1 is on the transport vehicle 80. When the selection switch 42L illustrated in FIG. 3 is operated by the operator, the controller 40 causes the display 50 to display the selection screen M2 as illustrated in FIG. 6. When the selection button 50b on the selection screen M2 is selected by the operator, the controller 40 starts the process of the unloading automatic operation illustrated in FIG. 14. The sensor 41L performs sensing before the start of the unloading automatic operation (S21). As described above, the sensing is performed to sense the surrounding condition of the working vehicle 1 (for example, a surrounding condition in rear of the working vehicle 1).

The transport determiner 54 determines whether the working vehicle 1 (vehicle body 3) can be unloaded from the transport vehicle 80 based on sensed data obtained by sensing by the sensor 41L (that is, data indicating the surrounding condition behind the working vehicle 1) and the device condition in which the working device 2 is coupled to the working vehicle 1 (vehicle body 3) (S22). When determining that the first and second preconditions are satisfied, and as to the third precondition, only in the case of unloading, determining that a limited condition is satisfied (there is no obstacle 103 behind the working vehicle 1 or the width W103 of the loading platform 81 at the location where an obstacle 103 is present is larger than the overall width W40 of the agricultural machine and exceeds the twelfth threshold) ("YES" in S22), the transport determiner 54 determines that it is possible to perform unloading. Then, the controller 40 causes the automatic operation controller 40E to perform automatic operation (S23). When the working vehicle 1 (see FIG. 5B) has been unloaded from the loading platform 81 of the transport vehicle 80 to a position behind the transport vehicle 80 by the automatic operation (see FIG. 5A), the automatic operation controller 40E ends the automatic operation, and the process ends.

In contrast, in S22, when determining that at least one of the first to third preconditions (as to the third precondition, only the limited condition) is not satisfied ("NO" in S22), the transport determiner 54 determines that it is not possible to perform unloading. Then, the controller 40 causes the display 50 to display the instruction screen M3 which provides a prompt for designation of a transmission destination as illustrated in FIG. 13A (S24). For example, when the first precondition is not satisfied, the controller 40 causes a message indicating that the first precondition is not satisfied (for example, "Road condition is inappropriate. Please move transport vehicle to another location.") to be displayed on the instruction screen M3 illustrated in FIG. 13. When the second precondition is not satisfied, the controller 40 causes a message indicating that the second precondition is not satisfied (for example, "Bridge plates need to be adjusted.") to be displayed on the instruction screen M3. When the third precondition is not satisfied, the controller 40 causes a message indicating that the third precondition is not satisfied (for example, when there is an obstacle on the loading platform, "There is obstacle on loading platform, please remove obstacle.") to be displayed on the instruction screen M3.

Then, when the instruction button 50c indicating "transport vehicle" on the instruction screen M3 is selected by the operator ("transport vehicle" in S24), the controller 40 causes the communication device 55 to transmit the vehicle size information of the agricultural machine to the transport vehicle 80 (S25). The adjustment mechanism 83 of the transport vehicle 80 adjusts the pair of bridge plates 82 (S26). Specifically, the adjustment mechanism 83 of the transport vehicle 80 performs a hydraulic driving operation including performing the position adjustment so that the center-to-center distance W8 of the pair of bridge plates 82 matches the tread width W22 of the vehicle body 3 based on the vehicle size information (for example, information indicating the tread width W22 of the vehicle body 3) from the communication device 55. When travel information of the agricultural machine (for example, the positions of the bridge plates 82 or the angle θ1 of the bridge plates 82) is transmitted from the communication device 55, the adjustment mechanism 83 of the transport vehicle 80 performs, based on the travel information, a hydraulic driving operation including performing the position adjustment so that the center-to-center distance W8 between the pair of bridge plates 82 matches the tread width W22 of the vehicle body 3, and a hydraulic driving operation including changing the angle of the bridge plates 82 by adjusting the length of each of the bridge plates 82. When the pair of bridge plates 82 are in the retracted state, the adjustment mechanism 83 brings the pair of bridge plates 82 into the extended state and then causes the center-to-center distance W8 of the pair of bridge plates 82 to match the tread width W22 of the vehicle body 3.

Then, the controller 40 causes the display 50 to display the sensing start screen M4 as illustrated in FIG. 13C. When the start button 50e on the sensing start screen M4 is selected by the operator ("YES" in S27), the controller 40 causes the sensor 41L to perform sensing again before the start of the unloading automatic operation (S21). In contrast, when the end button 50f on the sensing start screen M4 is selected by the operator in S27, the controller 40 ends the process without performing the unloading automatic operation.

In S24, when the instruction button 50d indicating "external device" on the instruction screen M3 is selected by the operator ("external device" in S24), the controller 40 causes the communication device 55 to transmit the vehicle size information of the agricultural machine to the external device 56 (S28). The external device 56 causes the display 57 to display the vehicle size information of the agricultural machine received by the communication device 84. The display 57 displays the vehicle size information of the agricultural machine (for example, the tire-position maximum width W21 of the vehicle body 3, the tread width W22 of the vehicle body 3). While looking at the display 57 of the external device 56, the operator can manually adjust the positions of the bridge plates 82 so that the center-to-center distance W8 of the pair of bridge plates 82 matches the tread width W22 of the vehicle body 3. When the external device 56 causes the display 57 to display the travel information (the positions of the bridge plates 82 or the angle θ1 of the bridge plates 82), the operator can manually adjust the positions and the inclination of the bridge plates 82 while looking at the travel information (the positions of the bridge plates 82 or the angle θ1 of the bridge plates 82) displayed on the display 57.

Note that, after the above-described manual adjustment is performed by the operator, when the start button 50e on the sensing start screen M4 is selected by the operator ("YES" in S27), the controller 40 causes the sensor 41L to perform sensing again before the start of the unloading automatic operation (S21).

A transport system for a working machine (agricultural machine) includes a sensor 41L to sense surroundings of an agricultural machine (for example, working vehicle 1) configured to perform automatic operation, the sensor 41L being provided in or on an the agricultural machine, and a transport determiner 54 to determine whether it is possible to load the agricultural machine onto and/or unload the agricultural machine from a transport vehicle 80 based on the surroundings of the working machine sensed by the sensor 41L.

With this, it is possible to automatically perform safety verification, adjust the bridge plate(s), check a stop location of the transport vehicle, and/or the like, when loading and/or unloading the agricultural machine. Thus, it is possible to reduce the workload of the operator relating to loading and/unloading of the agricultural machine. For example, the determination and adjustment regarding work that have been performed by the operator can now be performed by a machine, making it possible to save labor. It is also possible to reduce, for example, the risk of overturn of the agricultural machine when loaded or unloaded.

The transport system further includes a communication device 55 provided in or on the agricultural machine to transmit information relating to loading and/or unloading of the agricultural machine onto and/or from the transport vehicle 80. With this, the transport vehicle 80 can utilize the information relating to the loading and/or the unloading of the agricultural machine transmitted from the communication device 55 of the agricultural machine.

The communication device 55, if the transport determiner 54 makes a determination that it is not possible to load the agricultural machine onto the transport vehicle or it is not possible to unload the agricultural machine from the transport vehicle 80, transmits the information which is the determination to the transport vehicle 80. With this, the transport vehicle 80 can recognize that the agricultural machine cannot be loaded or the agricultural machine cannot be unloaded based on the information transmitted from the communication device 55 of the agricultural machine. For example, the information transmitted to the transport vehicle 80 is information indicating the result of determination made by the transport determiner 54 as to whether the first to third preconditions are satisfied (information indicating that at least one of a road condition, a transport vehicle condition, or a bridge plate condition is inappropriate). Thus, it is possible to know which of the road condition, the transport vehicle condition, and the bridge plate condition is/are inappropriate.

The transport vehicle 80 includes a bridge plate 82 and an adjustment mechanism 83 configured to adjust a position of the bridge plate 82. The communication device 55 transmits, to the transport vehicle 80, the information which is vehicle size information relating to a vehicle size of the agricultural machine (for example, a tire-position maximum width W21 of a vehicle body 3, a tread width W22 of the vehicle body 3, and/or the like, described later). The adjustment mechanism 83 adjusts the position of the bridge plate 82 based on the vehicle size information. With this, the transport vehicle 80 can automatically adjust the position of the bridge plate 82 such that the position is suitable for the vehicle size of the agricultural machine. Thus, it is not necessary for the operator to adjust the position of the bridge plate 82 of the transport vehicle 80. This makes it possible to reduce the workload of the operator.

The transport vehicle 80 includes a bridge plate 82. The communication device 55 transmits, to a display 57 of an external device 56, the information which is vehicle size information relating to a vehicle size of the agricultural machine. The display 57 of the external device 56 displays the vehicle size information. With this, the operator can manually adjust the position of the bridge plate 82 while looking at the vehicle size information displayed on the display 57 of the external device 56. Thus, the operator can adjust the position of the bridge plate 82 more easily than in the case where the operator adjusts the position of the bridge plate 82 without looking at the vehicle size information.

The transport vehicle 80 includes a bridge plate 82. The communication device 55 transmits, to the display 57 of the external device 56, the information which is travel information including a position of the bridge plate 82 and/or an angle of the bridge plate 82 for the agricultural machine to pass over the bridge plate 82. The display 57 of the external device 56 displays the travel information. With this, the operator can manually adjust the position and the angle of the bridge plate 82 while looking at the travel information including the position of the bridge plate 82 and/or the angle of the bridge plate 82 displayed on the display 57 of the external device 56. Thus, the operator can adjust the position and the angle of the bridge plate 82 more easily than in the case where the operator adjusts the position and the angle of the bridge plate 82 without looking at the travel information.

The sensor 41L senses the position of the bridge plate 82. The transport determiner 54 determines whether it is possible to load the agricultural machine onto the transport vehicle 80 based on the position of the bridge plate 82. The agricultural machine travels by the automatic operation toward the bridge plate 82 of the transport vehicle 80 when it is possible to load the agricultural machine onto the transport vehicle 80. This makes it possible to safely perform the automatic operation relating to loading of the agricultural machine.

The sensor 41L senses the position of the bridge plate 82. The transport determiner 54 determines whether it is possible to unload the agricultural machine from the transport vehicle 80 based on the position of the bridge plate 82. The agricultural machine travels by the automatic operation toward the bridge plate 82 of the transport vehicle 80 when it is possible to unload the agricultural machine from the transport vehicle 80. This makes it possible to safely perform the automatic operation relating to unloading of the agricultural machine.

An agricultural machine includes a working vehicle 1, a sensor 41L provided in or on the working vehicle 1 to sense surroundings of the working vehicle 1, and a transport determiner 54 to determine whether it is possible to load the working vehicle 1 onto and/or unload the working vehicle 1 from a transport vehicle 80 based on the surroundings of the working vehicle 1 sensed by the sensor 41L. With this, it is possible to automatically perform safety verification, adjust the bridge plate, check a stop location of the transport vehicle, and/or the like, when loading and/or unloading the agricultural machine. Thus, it is possible to reduce the workload of the operator relating to loading and/or unloading of the agricultural machine.

The agricultural machine further includes a controller 40 to cause the working vehicle 1 to travel by automatic operation toward a bridge plate 82 of the transport vehicle 80 when it is possible to load the working vehicle 1 onto the transport vehicle 80. With this, it is possible to reduce the workload of the operator relating to loading of the agricultural machine.

The sensor 41L senses the bridge plate 82 and/or the transport vehicle 80 while the working vehicle 1 travels by the automatic operation toward the transport vehicle 80. With this, it is possible to automatically perform safety verification, adjust the bridge plate, check a stop location of the transport vehicle, and/or the like, when loading the agricultural machine.

The controller 40 stops the automatic operation or causes the working vehicle 1 to travel backward when the sensor 41L senses a change in a position of the bridge plate 82 and/or the transport vehicle 80. With this, it is possible to improve safety during loading of the agricultural machine.

The transport vehicle 80 includes an adjustment mechanism 83 to adjust a position of the bridge plate 82 The adjustment mechanism 83 adjusts the position of the bridge plate 82 based on vehicle size information of the working vehicle 1. With this, the transport vehicle 80 can automatically adjust the position of the bridge plate 82 such that the position is suitable for the vehicle size of the agricultural machine. Thus, it is not necessary for the operator to adjust the position of the bridge plate 82. Therefore, it is possible to reduce the workload of the operator.

The sensor 41L senses a position of the bridge plate 82. The transport determiner 54 determines whether it is possible to load the working vehicle 1 onto the transport vehicle 80 based on the position of the bridge plate 82. The working vehicle 1 travels by the automatic operation toward the bridge plate 82 of the transport vehicle 80 when it is possible to load the working vehicle 1 onto the transport vehicle 80. With this, it is possible to safely perform loading of the agricultural machine by automatic operation.

Note that a transport system for a working machine (agricultural machine) includes an agricultural machine (working vehicle 1, working device 2), a transport vehicle 80, and an external device 56, but this does not imply any limitation. The transport system for a working machine (agricultural machine) need only include at least a working machine (agricultural machine).

Although the agricultural machine includes a working vehicle 1 and a working device 2 in the above-described embodiments, the agricultural machine may include only a working vehicle 1. In this case, the device condition described earlier is only the condition of the working vehicle 1 (vehicle condition), and it is not necessary to take into consideration the condition of the working device 2 (working device condition). Thus, even when the agricultural machine includes only a working vehicle 1, the working vehicle 1 can be appropriately loaded onto and unloaded from the transport vehicle 80 by automatic operation.

In the above-described embodiments, the bridge plate(s) 82 of the transport vehicle 80 is described as an example, but the transport vehicle 80 is not limited to a transport vehicle 80 including bridge plate(s) 82. For example, in the case of a transport vehicle 80 including a lifter instead of the bridge plate(s) 82, when the agricultural machine is loaded or unloaded, the transport determiner 54 may determine that the position of the lifter is appropriate as the second precondition, and control the lifter of the transport vehicle 80.

In the present embodiment, the transport determiner 54 determines whether there is a loading space for the working vehicle 1 on the loading platform 81 of the transport vehicle 80 as the third precondition, but this does not imply any limitation. The transport determiner 54 may determine which location on the loading platform 81 of the transport vehicle 80 is set as the loading place for the agricultural machine (the working vehicle 1 and the working device 2). The transport determiner 54 evaluates the above-described loading place for the agricultural machine based on determination factors such as the left-right dimension and the front-rear dimension of the working device 2 coupled to the working vehicle 1, an empty space on the loading platform 81, whether the number of working vehicles 1 to be loaded is one or two or more, and specification information (such as vehicle size information) of a plurality of working vehicles 1. The transport determiner 54 may be configured to decide the condition (second precondition) of the bridge plate 82 based on the determination regarding the loading location of the agricultural machine (that is, where on the loading platform 81 the agricultural machine is to be loaded). For example, the transport determiner 54 may be configured to decide the second precondition as described in first and second variations as follows.

### <First variation>

When a working vehicle to which a laterally asymmetric working device 2 (for example, a working device protruding only on the left) is coupled is to be loaded, the working vehicle 1 needs to be displaced rightward when loaded onto the transport vehicle 80. In this case, the midpoint between the bridge plates 82 not at the widthwise center of the loading platform 81 of the transport vehicle 80, but the transport determiner 54 determines a second precondition in which the bridge plates 82 are displaced rightward from the widthwise center of the loading platform 81.

### <Second variation>

When two working vehicles 1 are to be transported, the transport determiner 54 determines whether it is possible to load one working vehicle 1 on a right portion of the loading platform 81 and to load the other working vehicle 1 on a left portion of the loading platform 81 based on specification information (such as vehicle size information) on the two working vehicles 1. When it is determined that the two working vehicles 1 can be loaded, the transport determiner 54 determines a second precondition indicating that the two working vehicles 1 are loaded in the manner described above.

In the above-described embodiments and variations, the agricultural machine is described as an example of the working machine, but the working machine is not limited to the agricultural machine. For example, the working machine may be a utility vehicle (UV) or a riding mower (mower). Also, the working machine may be a construction machine, such as a swiveling working machine (backhoe), a wheel loader, a skid-steer loader, or a compact truck loader. The working machine may be a mower, a tedder, a rake, a baler, or the like. Thus, embodiments and variations are applicable also to loading or unloading of a working machine such as a utility vehicle, a riding mower, or a construction machine.

It is to be understood that the embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: Working vehicle (agricultural machine)
- 40: Controller
- 41L: Sensor
- 54: Transport determiner
- 55: Communication device
- 56: External device
- 57: Display
- 80: Transport vehicle
- 82: Bridge plate
- 83: Adjustment mechanism

## Claims

1. A transport system for a working machine, comprising:
a sensor to sense surroundings of a working machine configured to perform automatic operation, the sensor being provided in or on the working machine; and
a transport determiner to determine whether it is possible to load the working machine onto and/or unload the working machine from a transport vehicle based on the surroundings of the working machine sensed by the sensor.

2. The transport system according to claim 1, further comprising a communication device provided in or on the working machine to transmit information relating to loading and/or unloading of the working machine onto and/or from the transport vehicle.

3. The transport system according to claim 2, wherein
the communication device, if the transport determiner makes a determination that it is not possible to load the working machine onto the transport vehicle or unload the working machine from the transport vehicle, transmits the information which is the determination to the transport vehicle.

4. The transport system according to claim 2 or 3, wherein
the transport vehicle includes a bridge plate and an adjustment mechanism configured to adjust a position of the bridge plate;
the communication device transmits, to the transport vehicle, the information which is vehicle size information relating to a vehicle size of the working machine; and
the adjustment mechanism adjusts the position of the bridge plate based on the vehicle size information.

5. The transport system according to claim 2 or 3, wherein
the transport vehicle includes a bridge plate; and
the communication device transmits, to a display, the information which is vehicle size information relating to a vehicle size of the working machine, and the display displays the vehicle size information.

6. The transport system according to claim 5, wherein
the communication device transmits, to the display, the information which is travel information including a position of the bridge plate and/or an angle of the bridge plate for the working machine to pass over the bridge plate, and the display displays the travel information.

7. The transport system according to any one of claims 4 to 6, wherein
the sensor senses the position of the bridge plate;
the transport determiner determines whether it is possible to load the working machine onto the transport vehicle based on the position of the bridge plate; and
the working machine travels by the automatic operation toward the bridge plate of the transport vehicle when it is possible to load the working machine onto the transport vehicle.

8. The transport system according to any one of claims 4 to 6, wherein
the sensor senses the position of the bridge plate;
the transport determiner determines whether it is possible to unload the working machine from the transport vehicle based on the position of the bridge plate; and
the working machine travels by the automatic operation toward the bridge plate of the transport vehicle when it is possible to unload the working machine from the transport vehicle.

9. A working machine comprising:
a working vehicle;
a sensor provided in or on the working vehicle to sense surroundings of the working vehicle; and
a transport determiner to determine whether it is possible to load the working vehicle onto and/or unload the working vehicle from a transport vehicle based on the surroundings of the working vehicle sensed by the sensor.

10. The working machine according to claim 9, further comprising a controller to cause the working vehicle to travel by automatic operation toward a bridge plate of the transport vehicle when it is possible to load the working vehicle onto the transport vehicle.

11. The working machine according to claim 10, wherein
the sensor senses the bridge plate and/or the transport vehicle while the working vehicle travels by the automatic operation toward the transport vehicle.

12. The working machine according to claim 11, wherein
the controller stops the automatic operation or causes the working vehicle to travel backward when the sensor senses a change in a position of the bridge plate and/or the transport vehicle.

13. The working machine according to any one of claims 10 to 12, wherein
the transport vehicle includes an adjustment mechanism to adjust a position of the bridge plate; and
the adjustment mechanism adjusts the position of the bridge plate based on vehicle size information of the working vehicle.

14. The working machine according to any one of claims 11 to 13, wherein
the sensor senses a position of the bridge plate;
the transport determiner determines whether it is possible to load the working vehicle onto the transport vehicle based on the position of the bridge plate; and
the working vehicle travels by the automatic operation toward the bridge plate of the transport vehicle when it is possible to load the working vehicle onto the transport vehicle.
